# EUROPEAN PATENT APPLICATION

(11) **EP 4 451 794 A1**
(43) Date of publication of application: **23.10.2024**
(21) Application number: 22921667.6
(22) Date of filing: 06.12.2022
(51) Int. Cl.: H04W 88/04, H04W 4/06

(54) **COMMUNICATION METHOD AND APPARATUS, AND STORAGE MEDIUM**

(30) Priority: 21.01.2022 CN 202210073460
(71) Applicant: Huawei Technologies Co., Ltd., Shenzhen, Guangdong 518129 (CN)
(72) Inventor: PAN, Xiaodan, Shenzhen, Guangdong 518129 (CN); PENG, Wenjie, Shenzhen, Guangdong 518129 (CN)
(74) Representative: Goddar, Heinz J.
(86) International application number: PCT/CN2022/136905
(87) International publication number: WO 2023/138243

(57) **Abstract**

Embodiments of this application provide a communication method and apparatus, and a storage medium. The method includes: A first terminal device receives a first broadcast message sent by a second terminal device. If the first terminal device does not receive a second broadcast message from the second terminal device within first duration after the first terminal device receives the first broadcast message, the first terminal device determines that the second terminal device is not a relay device of the first terminal device. According to embodiments of this application, whether the terminal device is suitable to serve as a relay terminal can be determined more accurately.

## Description

This application claims priority to Chinese Patent Application No. 202210073460.1, filed with the China National Intellectual Property Administration on January 21, 2022 and entitled "COMMUNICATION METHOD AND APPARATUS, AND STORAGE MEDIUM", which is incorporated herein by reference in its entirety.

### TECHNICAL FIELD

This application relates to the field of communication technologies, and in particular, to a communication method and apparatus, and a storage medium.

### BACKGROUND

In a user equipment-to-network relay (UE-to-Network Relay, U2N Relay) communication system, a remote (remote) terminal may communicate with a network device via a relay (relay) terminal. The remote terminal communicates with the relay terminal through a sidelink (sidelink, SL), and a corresponding interface is referred to as PC5. The relay terminal and the network device are directly connected to each other, that is, communicate with each other through an air interface (for example, a Uu interface).

In the U2N relay communication system, the remote terminal may measure, based on a configuration of the network device, communication quality of a current serving cell and communication quality of a sidelink between the remote terminal and a surrounding relay terminal, to facilitate mobility management. For example, the remote terminal may switch from directly connecting to the network device to connecting to the network device via the relay terminal. The remote terminal determines an appropriate relay device based on a measurement result, and reports the relay device to the network device, so that the network device can make a decision based on the relay device reported by the remote terminal, and the remote terminal switches to the appropriate relay terminal.

The remote terminal may usually measure signal quality between the remote terminal and the relay terminal based on a discovery message broadcast by the relay terminal, and determine, based on the signal quality, whether the relay terminal is suitable to serve as a relay device of the remote terminal. However, in the foregoing method, whether the relay terminal is suitable to serve as the relay device of the remote terminal cannot be accurately determined.

### SUMMARY

Embodiments of this application provide a communication method and apparatus, and a storage medium, to more accurately determine whether a terminal device is suitable to serve as a relay terminal.

According to a first aspect, an embodiment of this application provides a communication method. The method includes:
A first terminal device receives a first broadcast message sent by a second terminal device. If the first terminal device does not receive a second broadcast message from the second terminal device within first duration after the first terminal device receives the first broadcast message, the first terminal device determines that the second terminal device is not a relay device of the first terminal device.

In this embodiment of this application, the first broadcast message and the second broadcast message may be discovery messages sent by the first terminal device at different moments, and the discovery message indicates that the second terminal device provides a relay service. When providing the relay service, the second terminal device usually periodically broadcasts the discovery message. When the second terminal device does not provide the relay service, the second terminal device stops sending the discovery message. Therefore, if the first terminal device does not receive the second broadcast message within the first duration after receiving the first broadcast message, the first terminal device may determine that the second terminal device is no longer suitable to serve as the relay device, so that the first terminal device can determine an inappropriate terminal device, that is, can more accurately determine whether the second terminal device is suitable to serve as the relay device of the first terminal device.

In a possible implementation, after the determining that the second terminal device is not a relay device of the first terminal device, the method further includes: The first terminal device deletes measurement information corresponding to the second terminal device.

In this embodiment of this application, after determining that the second terminal device is not the relay device of the first terminal device, in other words, the second terminal device is not suitable to serve as the relay device of the first terminal device, the first terminal device may not report the measurement information corresponding to the second terminal device to the network device. Therefore, the first terminal device may delete the measurement information corresponding to the second terminal device from a measurement result, so that the measurement result reported by the first terminal device does not include the measurement information corresponding to the inappropriate terminal device, to ensure that the measurement result includes measurement information of an appropriate terminal device. In addition, memory space occupied by the measurement result may be saved, and resources needed for reporting the measurement result are reduced.

In a possible implementation, there is a unicast connection between the first terminal device and the second terminal device, and after the determining that the second terminal device is not a relay device of the first terminal device, the method further includes at least one of the following: The first terminal device determines to reselect a relay device. Alternatively, the first terminal device reports a measurement result to a first network device.

In this embodiment of this application, the second terminal device is a relay device of the first terminal device at a current moment. The foregoing determining that the second terminal device is not a relay device of the first terminal device may be understood as that the second terminal device is no longer the relay device of the first terminal device. Therefore, the first terminal device may reselect the relay device or trigger measurement reporting, to switch from the relay device of the first terminal device to an appropriate terminal device. For example, when the first terminal device is in an RRC connected state, after determining that the second terminal device is not the relay device of the first terminal device, the first terminal device may trigger the measurement reporting, to report the measurement result to the first network device, so that the first network device may indicate, based on the measurement result, the first terminal device to switch to an appropriate cell or relay device. When the first terminal device is in an RRC idle state or an RRC inactive state, after determining that the second terminal device is not the relay device of the first terminal device, the first terminal device determines to reselect the relay device, so that the first terminal device can switch to an appropriate relay device.

In a possible implementation, there is a unicast connection between the first terminal device and the second terminal device, and before the determining that the second terminal device is not a relay device of the first terminal device, the method further includes: The first terminal device sends first indication information to the second terminal device through the unicast connection. The first indication information is used to trigger the second terminal device to send a first message, the first message is used to measure first signal quality, and the first signal quality is signal quality between the first terminal device and the second terminal device. The first terminal device receives the first message. The first terminal device determines the first signal quality based on the first message. The determining that the second terminal device is not a relay device of the first terminal device includes: When the first signal quality is less than a first threshold, the first terminal device determines that the second terminal device is not the relay device of the first terminal device.

In this embodiment of this application, there is the unicast connection between the first terminal device and the second terminal device, and the second terminal device provides a relay service for the first terminal device. Therefore, the first terminal device can trigger, by using the first indication information, the second terminal device to send the first message when the first terminal device does not receive the second broadcast message sent by the second terminal device within the first duration after receiving the first broadcast message, so that data transmission is performed between the first terminal device and the second terminal device, and the first terminal device can detect the first signal quality between the first terminal device and the second terminal device based on the first message. Then, the first terminal device determines, based on the first signal quality, whether the second terminal device is suitable to continue providing the relay service for the first terminal device, to more accurately determine whether the second terminal device is suitable to serve as the relay device of the first terminal device. When the first signal quality is less than the first threshold, the first terminal device determines that the second terminal device is no longer suitable to provide the relay service for the first terminal device, and the first terminal device can report to the first network device, to switch from the relay device based on an indication of the first network device. When the first signal quality is not less than the first threshold, the first terminal device determines that the second terminal device is suitable to continue providing the relay service for the first terminal device, and does not need to switch from the relay device, to avoid unnecessary switch.

In a possible implementation, the determining that the second terminal device is not a relay device of the first terminal device includes: When receiving second indication information from the second terminal device, the first terminal device determines that the second terminal device is not the relay device of the first terminal device. The second indication information indicates that the second terminal device does not provide a relay service.

In this embodiment of this application, the first terminal device can more quickly determine, based on the second indication information sent by the second terminal device, that the second terminal device is not the relay device of the first terminal device, but does not need to determine that the second terminal device is not the relay device of the first terminal device until detecting that the second broadcast message is not received within the first duration after the first broadcast message is received.

In a possible implementation, the second indication information is sent by the second terminal device when second signal quality is less than a second threshold or the second signal quality is greater than a third threshold, and the second signal quality is signal quality between the second terminal device and a second network device.

In this embodiment of this application, when the second signal quality is less than the second threshold or the second signal quality is greater than the third threshold, the second terminal device is not suitable to provide the relay service. Therefore, the second indication information is sent, to indicate, to the first terminal device in a timely manner, that the second terminal device does not provide the relay service.

In a possible implementation, the first broadcast message includes a first identifier, the first identifier identifies the second terminal device, and the first identifier is generated when the second terminal device accesses a serving cell of the second terminal device.

In this embodiment of this application, after receiving the first broadcast message, the first terminal device determines, based on the first identifier carried in the first broadcast message, that the first broadcast message is from the second terminal device. After cell change is performed, the second terminal device may update the identifier carried in the broadcast message, so that the first terminal device may consider the second terminal device after the cell change as a new measurement object for recording, and does not need to update serving cell information of the second terminal device, to reduce workload of the first terminal device. This improves measurement efficiency of the first terminal device.

In a possible implementation, the first broadcast message includes first cell information of the second terminal device, and after the first terminal device receives the first broadcast message sent by the second terminal device, the method further includes: The first terminal device determines, based on the first cell information, whether the serving cell of the second terminal device changes. When the serving cell of the second terminal device changes, the first terminal device sends a second message to the first network device. The second message includes the first cell information.

In this embodiment of this application, when determining that the serving cell of the second terminal device changes, the first terminal device sends the second message to the first network device, so that the first network device can update serving cell information of the second terminal device in a timely manner, to prevent the relay device of the first terminal device from failing in switching to the second terminal device because the first network device does not update the serving cell information of the second terminal device in a timely manner.

In a possible implementation, that the first terminal device sends a second message to the first network device includes: The first terminal device determines, based on the first cell information, whether a current serving cell of the second terminal device is an allowed cell. When the current serving cell of the second terminal device is the allowed cell, the first terminal device sends the second message to the first network device.

In this embodiment of this application, when the current serving cell of the second terminal device is the allowed cell, it is determined that the second terminal device can provide the relay service for the first terminal device. In this case, the first terminal device sends the second message to the first network device, so that the first network device updates serving cell information of the second network device in a timely manner.

In a possible implementation, the method further includes: When the current serving cell of the second terminal device is a blocked cell, the first terminal device deletes the measurement information corresponding to the second terminal device.

In this embodiment of this application, when the current serving cell of the second terminal device is the blocked cell, the first terminal device determines that the second terminal device cannot provide the relay service for the first terminal device. Therefore, the first terminal device can delete the measurement information corresponding to the second terminal device from a measurement result of the first terminal device, so that the measurement result reported by the first terminal device does not include the measurement information of the second terminal device, to ensure that the reported measurement result includes measurement information of an appropriate terminal device. In addition, memory space occupied by the measurement result can be saved, and resources needed when the first terminal device reports the measurement result can be reduced.

In a possible implementation, the first cell information is included in the measurement information corresponding to the second device.

In this embodiment of this application, when determining that the serving cell of the second terminal device changes, the first terminal device can trigger measurement reporting, to report a measurement result of the first terminal device to the first network device. The measurement result includes the measurement information of the second terminal device, and the measurement information includes the first cell information. In this way, the first network device can update the measurement result of the first terminal device in a timely manner, so that the first network device can make a proper handover decision based on the measurement result.

In a possible implementation, the first broadcast message includes the first cell information of the second terminal device, and after the first terminal device receives the first broadcast message sent by the second terminal device, the method further includes: The first terminal device receives a third message from the first network device. The third message includes second cell information of the second terminal device, and the third message indicates to switch from the relay device of the first terminal device to the second terminal device. When the first cell information is inconsistent with the second cell information, the first terminal device determines that the switch fails.

In this embodiment of this application, the third message may be a handover command. For example, the first network device makes a handover decision based on a measurement result reported by the first terminal device, and instructs, by using the handover command, the first terminal device to switch to the second terminal device. The first terminal device may switch to the second terminal device based on the second cell information. It may be understood that the first terminal device may alternatively receive the third message before receiving the first broadcast message, or receive the first broadcast message and the third message simultaneously. When the first cell information is inconsistent with the second cell information, it indicates that the serving cell of the second terminal device has been handed over. Therefore, the first terminal device cannot switch to the second terminal device based on the second cell information, determines that the switch fails, and no longer performs a subsequent switch operation. This can avoid a waste of resources that is caused by the subsequent switch operation.

In a possible implementation, after the first terminal device determines that the switch fails, the method further includes at least one of the following:
the first terminal device records the switch failure;
the first terminal device breaks a connection to the second terminal device; and
the first terminal device performs radio resource control RRC connection reestablishment.

In this embodiment of this application, after determining that the switch fails, the first terminal device may perform a measurement record of the switch failure, to report a cause of the switch failure to the first network device. When there is the unicast connection between the first terminal device and the second terminal device, the unicast connection is broken, so that the first terminal device can establish a new unicast connection, to ensure communication quality of the first terminal device and avoid a waste of resources. After determining that the switch fails, the first terminal device may further perform the RRC connection reestablishment, to restore an RRC signaling connection and prevent the first terminal device from going offline.

In a possible implementation, the method further includes: The first terminal device receives third indication information of the first network device. The third indication information indicates the first duration.

In this embodiment of this application, the first duration may be determined by the first network device, so that the first network device can properly manage and control a measurement reporting behavior of the first terminal device.

In a possible implementation, before the determining that the second terminal device is not a relay device of the first terminal device, the method further includes: When receiving the first broadcast message, the first terminal device starts a first timer corresponding to the second terminal device. Running duration of the first timer is equal to the first duration. When the first timer expires, the first terminal device determines that the second broadcast message is not received within the first duration.

In this embodiment of this application, the first terminal device may effectively monitor, within the first duration in a timing manner of the first timer, the second broadcast message sent by the second terminal device. It should be understood that the first terminal device may receive broadcast messages of a plurality of terminal devices, and maintain a timer for each of the plurality of terminal devices, to effectively monitor the broadcast messages of the plurality of terminal devices, and determine whether the plurality of terminal devices are suitable to serve as relay devices of the first terminal device.

In a possible implementation, the method further includes: If receiving the second broadcast message within the first duration, the first terminal device resets the first timer.

In this embodiment of this application, when receiving the second broadcast message, the first terminal device resets the first timer, to continue monitoring a discovery message sent by the second terminal device, so that the first terminal device can detect, in a timely manner, a case in which the second terminal device stops sending the discovery message.

In a possible implementation, the first timer is controlled by a protocol layer of the first terminal device, and the protocol layer includes any one of a radio resource control RRC layer, a physical layer, a media access control MAC layer, and a discovery protocol layer.

In this embodiment of this application, the first timer is controlled by the protocol layer of the first terminal device, so that the first timer can be effectively maintained.

According to a second aspect, an embodiment of this application provides a communication method. The method includes: A first terminal device receives a first broadcast message sent by a second terminal device. If the first terminal device does not receive a broadcast message from the second terminal device within first duration after the first terminal device receives the first broadcast message, the first terminal device performs any one of the following: deleting measurement information corresponding to the second terminal device; determining to reselect a relay device; and reporting a measurement result to a first network device.

In this embodiment of this application, the first broadcast message and the second broadcast message may be discovery messages sent by the first terminal device at different moments, and the discovery message indicates that the second terminal device provides a relay service. When providing the relay service, the second terminal device usually periodically broadcasts the discovery message. When the second terminal device does not provide the relay service, the second terminal device stops sending the discovery message. Therefore, if the first terminal device does not receive the second broadcast message within the first duration after receiving the first broadcast message, the first terminal device may determine that the second terminal device is not suitable to serve as the relay device of the first terminal device. The first terminal device may determine, based on a connection status of the first terminal device, a subsequent operation to be performed. For example, when there is no unicast connection between the first terminal device and the second terminal device, that is, the second terminal device does not provide the relay service for the first terminal device, the first terminal device may delete the measurement information corresponding to the second terminal device from the measurement result, so that the measurement result reported by the first terminal device does not include measurement information corresponding to an inappropriate terminal device, to ensure that the measurement result includes measurement information of an appropriate terminal device. When there is a unicast connection between the first terminal device and the second terminal device, and the first terminal device is in an RRC connected state, the first terminal device may trigger measurement reporting, to report the measurement result to the first network device, so that the first network device can indicate, based on the measurement result, the first terminal device to perform switch of the relay device, and the first terminal device can switch to an appropriate cell or relay device. When there is a unicast connection between the first terminal device and the second terminal device, and the first terminal device is in an RRC idle state or an RRC inactive state, the first terminal device can determine to reselect the relay device, so that the relay device of the first terminal device switches to an appropriate relay device.

In a possible implementation, there is a unicast connection between the first terminal device and the second terminal device, and before the reporting a measurement result to a first network device, the method further includes: The first terminal device sends first indication information to the second terminal device through the unicast connection. The first indication information is used to trigger the second terminal device to send a first message, the first message is used to measure first signal quality, and the first signal quality is signal quality between the first terminal device and the second terminal device. The first terminal device receives the first message. The first terminal device determines the first signal quality based on the first message.

In this embodiment of this application, when there is the unicast connection between the first terminal device and the second terminal device, no data transmission is performed through the unicast connection between the first terminal device and the second terminal device, and the first terminal device does not receive the second broadcast message within the first duration after receiving the first broadcast message, the first terminal device may trigger, by using the first indication information, the second terminal device to send the first message, so that data transmission is performed between the first terminal device and the second terminal device. In this way, the first terminal device can detect the first signal quality between the first terminal device and the second terminal device based on the first message, and can accurately determine whether the second terminal is suitable to continue providing the relay service for the first terminal device.

In a possible implementation, the reporting a measurement result to a first network device includes: When the first signal quality is less than a first threshold, the first terminal device reports the measurement result to the first network device.

In this embodiment of this application, when the first signal quality is less than the first threshold, the first terminal device determines that the second terminal device is no longer suitable to provide the relay service for the first terminal device, and the first terminal device can report to the first network device, so that the first terminal device can switch to an appropriate relay device based on an indication of the first network device. It may be understood that when the first signal quality is not less than the first threshold, the first terminal device determines that the second terminal device is suitable to continue providing the relay service for the first terminal device, and does not need to switch from the relay device, to avoid unnecessary switch.

According to a third aspect, an embodiment of this application provides a communication method. The method includes:
A first terminal device receives a first broadcast message sent by a second terminal device. The first broadcast message includes first cell information of the second terminal device. The first terminal device determines, based on the first cell information, whether a serving cell of the second terminal device is handed over. When the serving cell of the second terminal device changes, the first terminal device sends a second message to the first network device. The second message includes the first cell information.

In this embodiment of this application, when determining that the serving cell of the second terminal device changes, the first terminal device sends the second message to the first network device, so that the first network device can update serving cell information of the second terminal device in a timely manner, to prevent the relay device of the first terminal device from failing in switching to the second terminal device because the first network device does not update the serving cell information of the second terminal device in a timely manner.

In a possible implementation, that the first terminal device sends a second message to the first network device includes:
The first terminal device determines, based on the first cell information, whether a current serving cell of the second terminal device is an allowed cell. When the current serving cell of the second terminal device is the allowed cell, the first terminal device sends the second message to the first network device.

In this embodiment of this application, when the current serving cell of the second terminal device is the allowed cell, it is determined that the second terminal device can provide a relay service for the first terminal device. In this case, the first terminal device sends the second message to the first network device, so that the first network device updates serving cell information of the second network device in a timely manner.

In a possible implementation, the method further includes:
When the current serving cell of the second terminal device is a blocked cell, the first terminal device deletes measurement information corresponding to the second terminal device.

In this embodiment of this application, when the current serving cell of the second terminal device is the blocked cell, the first terminal device determines that the second terminal device cannot provide a relay service for the first terminal device, and deletes the measurement information corresponding to the second terminal device from a measurement result of the first terminal device, to ensure that the reported measurement result includes measurement information of an appropriate terminal device. In addition, memory space occupied by the measurement result can be saved, and resources needed when the first terminal device reports the measurement result can be reduced.

In a possible implementation, the first cell information is included in the measurement information corresponding to the second device.

In this embodiment of this application, when determining that the serving cell of the second terminal device changes, the first terminal device can trigger measurement reporting, to report a measurement result of the first terminal device to the first network device. The measurement result includes the measurement information of the second terminal device, and the measurement information includes the first cell information. In this way, the first network device can update the measurement result of the first terminal device in a timely manner, so that the first network device can make a proper handover decision based on the measurement result.

According to a fourth aspect, an embodiment of this application provides a communication method. The method includes:
A first terminal device receives a first broadcast message sent by a second terminal device. The first broadcast message includes first cell information of the second terminal device. The first terminal device receives a third message from a first network device. The third message includes second cell information of the second terminal device, and the third message indicates to switch from a relay device of the first terminal device to the second terminal device. When the first cell information is inconsistent with the second cell information, the first terminal device determines that the switch fails.

In this embodiment of this application, the third message may be a handover command. For example, the first network device makes a handover decision based on a measurement result reported by the first terminal device, and instructs, by using the handover command, the first terminal device to switch to the second terminal device. When the first cell information is inconsistent with the second cell information, the first terminal device cannot switch to the second terminal device based on the third message. Therefore, it is determined that the switch fails, and a subsequent switch operation is no longer performed. This can avoid a waste of resources that is caused by the subsequent switch operation.

In a possible implementation, after the first terminal device determines that the switch fails, the method further includes at least one of the following:
the first terminal device records the switch failure;
the first terminal device breaks a connection to the second terminal device; and
the first terminal device performs radio resource control RRC connection reestablishment.

According to a fifth aspect, an embodiment of this application provides a communication method. The method includes:
A second terminal device measures second signal quality. The second signal quality is signal quality between the second terminal device and a second network device. When the second signal quality is less than a second threshold or the second signal quality is greater than a third threshold, the second terminal device sends second indication information. The second indication information indicates that the second terminal device does not provide a relay service.

In this embodiment of this application, when the second signal quality does not meet a threshold condition, that is, the second signal quality is less than the second threshold or the second signal quality is less than the third threshold, the second terminal device does not provide the relay service. Therefore, the second indication information may be sent, to notify a surrounding terminal device in a timely manner that the second terminal device does not provide the relay service, so as to prevent the surrounding terminal device of the second terminal device from reporting the second terminal device as the relay device.

According to a sixth aspect, an embodiment of this application provides a communication apparatus, configured to perform the method according to any one of the first aspect or the possible implementations of the first aspect. The communication apparatus includes a unit that performs the method according to any one of the first aspect or the possible implementations of the first aspect.

According to a seventh aspect, an embodiment of this application provides a communication apparatus, configured to perform the method according to any one of the second aspect or the possible implementations of the second aspect. The communication apparatus includes a unit that performs the method according to any one of the second aspect or the possible implementations of the second aspect.

According to an eighth aspect, an embodiment of this application provides a communication apparatus, configured to perform the method according to any one of the third aspect or the possible implementations of the third aspect. The communication apparatus includes a unit that performs the method according to any one of the third aspect or the possible implementations of the third aspect.

According to a ninth aspect, an embodiment of this application provides a communication apparatus, configured to perform the method according to any one of the fourth aspect or the possible implementations of the fourth aspect. The communication apparatus includes a unit that performs the method according to any one of the fourth aspect or the possible implementations of the fourth aspect.

According to a tenth aspect, an embodiment of this application provides a communication apparatus, configured to perform the method according to any one of the fifth aspect or the possible implementations of the fifth aspect. The communication apparatus includes a unit that performs the method according to any one of the fifth aspect or the possible implementations of the fifth aspect.

In the sixth aspect, the seventh aspect, the eighth aspect, the ninth aspect, or the tenth aspect, the communication apparatus may include a transceiver unit and a processing unit. For specific descriptions of the transceiver unit and the processing unit, refer to the apparatus embodiments provided below.

According to an eleventh aspect, this application provides a communication apparatus. The communication apparatus includes a processor. The processor may be configured to execute computer-executable instructions stored in a memory, so that the method shown in any one of the first aspect or the possible implementations of the first aspect is performed, the method shown in any one of the second aspect or the possible implementations of the second aspect is performed, the method shown in any one of the third aspect or the possible implementations of the third aspect is performed, the method shown in any one of the fourth aspect or the possible implementations of the fourth aspect is performed, or the method shown in any one of the fifth aspect or the possible implementations of the fifth aspect is performed.

In this embodiment of this application, in a process of performing the foregoing method, a process of sending information in the foregoing method may be understood as a process of outputting information based on instructions of the processor. When the information is output, the processor outputs the information to a transceiver, so that the transceiver transmits the information. After the information is output by the processor, other processing may further needs to be performed on the information before the information reaches the transceiver. Similarly, when the processor receives input information, the transceiver receives the information, and inputs the information into the processor. Further, after the transceiver receives the information, other processing may need to be performed on the information before the information is input into the processor.

Operations such as sending and/or receiving related to the processor may be generally understood as an instruction output based on the processor if there is no special description, or if the operations do not conflict with an actual function or internal logic of the operations in related descriptions.

In an implementation process, the processor may be a processor specially configured to perform these methods, or may be a processor, for example, a general-purpose processor, that executes the computer instructions in the memory to perform these methods. For example, the processor may be further configured to execute a program stored in the memory. When the program is executed, the communication apparatus is enabled to perform the method shown in any one of the first aspect or the possible implementations of the first aspect.

In a possible implementation, the memory is located outside the communication apparatus.

In a possible implementation, the memory is located inside the communication apparatus.

In this embodiment of this application, the processor and the memory may alternatively be integrated into one component. In other words, the processor and the memory may alternatively be integrated together.

In a possible implementation, the communication apparatus further includes a transceiver. The transceiver is configured to receive a packet, send a packet, or the like.

According to a twelfth aspect, this application provides a communication apparatus. The communication apparatus includes a processing circuit and an interface circuit. The interface circuit is configured to obtain data or output the data. The processing circuit is configured to: perform the corresponding method shown in any one of the first aspect or the possible implementations of the first aspect, the corresponding method shown in any one of the second aspect or the possible implementations of the second aspect, the corresponding method shown in any one of the third aspect or the possible implementations of the third aspect, the corresponding method shown in any one of the fourth aspect or the possible implementations of the fourth aspect, or the corresponding method shown in any one of the fifth aspect or the possible implementations of the fifth aspect.

According to a thirteenth aspect, this application provides a computer-readable storage medium. The computer-readable storage medium is configured to store a computer program. When the computer program is run on a computer, the method shown in any one of the first aspect or the possible implementations of the first aspect is performed, the method shown in any one of the second aspect or the possible implementations of the second aspect is performed, the method shown in any one of the third aspect or the possible implementations of the third aspect is performed, the method shown in any one of the fourth aspect or the possible implementations of the fourth aspect is performed, or the method shown in any one of the fifth aspect or the possible implementations of the fifth aspect is performed.

According to a fourteenth aspect, this application provides a computer program product. The computer program product includes a computer program or computer code. When the computer program product runs on a computer, the method shown in any one of the first aspect or the possible implementations of the first aspect is performed, the method shown in any one of the second aspect or the possible implementations of the second aspect is performed, the method shown in any one of the third aspect or the possible implementations of the third aspect is performed, the method shown in any one of the fourth aspect or the possible implementations of the fourth aspect is performed, or the method shown in any one of the fifth aspect or the possible implementations of the fifth aspect is performed.

According to a fifteenth aspect, this application provides a communication system. The communication system includes a first terminal device and a second terminal device. The first terminal device is configured to perform the method according to any one of the first aspect to the fourth aspect, and the second terminal device is configured to perform any one of the fifth aspect or the possible implementations of the fifth aspect.

### BRIEF DESCRIPTION OF DRAWINGS

The following describes accompanying drawings used in embodiments of this application.
FIG. 1 is a diagram of an architecture of a communication system according to an embodiment of this application;
FIG. 2 is a diagram of a control plane protocol architecture in sidelink communication according to an embodiment of this application;
FIG. 3 is a diagram of a protocol architecture of a discovery message according to an embodiment of this application;
FIG. 4A is a diagram of a scenario of a discovery process according to an embodiment of this application;
FIG. 4B is a diagram of a scenario of another discovery process according to an embodiment of this application;
FIG. 5A is a schematic interaction diagram of a unicast connection establishment process according to an embodiment of this application;
FIG. 5B is a schematic interaction diagram of another unicast connection establishment process according to an embodiment of this application;
FIG. 6 is a diagram of a structure of a communication system according to an embodiment of this application;
FIG. 7 is a diagram of a control plane protocol architecture according to an embodiment of this application;
FIG. 8 is a diagram of a user plane protocol architecture according to an embodiment of this application;
FIG. 9 is a diagram of a scenario of direct-to-indirect communication switch according to an embodiment of this application;
FIG. 10 is a schematic interaction diagram of direct-to-indirect communication switch according to an embodiment of this application;
FIG. 11 is a diagram of a scenario of indirect-to-direct communication switch according to an embodiment of this application;
FIG. 12 is a schematic interaction diagram of indirect-to-direct communication switch according to an embodiment of this application;
FIG. 13 is a diagram of an architecture of a multi-path relaying communication system according to an embodiment of this application;
FIG. 14 is a diagram of a communication scenario according to an embodiment of this application;
FIG. 15A is a schematic interaction diagram of a communication method according to an embodiment of this application;
FIG. 15B is a schematic interaction diagram of another communication method according to an embodiment of this application;
FIG. 15C is a schematic interaction diagram of still another communication method according to an embodiment of this application;
FIG. 16 is a diagram of a scenario of a communication method according to an embodiment of this application;
FIG. 17 is a schematic interaction diagram of still another communication method according to an embodiment of this application;
FIG. 18A is a schematic interaction diagram of still another communication method according to an embodiment of this application;
FIG. 18B is a schematic interaction diagram of still another communication method according to an embodiment of this application;
FIG. 19 is a schematic interaction diagram of still another communication method according to an embodiment of this application;
FIG. 20 is a schematic interaction diagram of still another communication method according to an embodiment of this application;
FIG. 21 is a schematic interaction diagram of still another communication method according to an embodiment of this application;
FIG. 22 is a diagram of a structure of a communication apparatus according to an embodiment of this application;
FIG. 23 is a diagram of a structure of another communication apparatus according to an embodiment of this application; and
FIG. 24 is a diagram of a structure of still another communication apparatus according to an embodiment of this application.

### DESCRIPTION OF EMBODIMENTS

In the specification, claims, and accompanying drawings of this application, terms such as "first" and "second" are merely intended to distinguish between different objects, but are not intended to limit a sequence, a time sequence, priorities, or importance degrees of a plurality of objects. In embodiments of this application, "a plurality of" refers to two or more. In addition, terms "include", "have", and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices. In addition, the character "/" usually indicates an "or" relationship between associated objects.

"Embodiment" mentioned in the specification means that a specific feature, structure, or characteristic described in combination with the embodiment may be included in at least one embodiment of this application. The phrase shown in various locations in the specification may not necessarily refer to a same embodiment, and is not an independent or optional embodiment exclusive from another embodiment. It may be understood explicitly and implicitly by a person skilled in the art that embodiments described in the specification may be combined with other embodiments.

A terminal device in embodiments of this application may be user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a future 5G network, a terminal device in a future evolved public land mobile network (public land mobile network, PLMN), or the like. This is not limited in embodiments of this application.

A network device in embodiments of this application may be a device that connects the terminal device to a wireless network, and may be specifically a base station. The base station may include various forms of base stations, for example, a macro base station, a micro base station (also referred to as a small cell), a relay station, and an access point. The network device may be specifically an access point (access point, AP) in a wireless local area network (wireless local area network, WLAN), a base transceiver station (base transceiver station, BTS) in global system for mobile communications (global system for mobile communications, GSM) or code division multiple access (code division multiple access, CDMA), a NodeB (NodeB, NB) in wideband code division multiple access (wideband code division multiple access, WCDMA), an evolved NodeB (Evolved NodeB, eNB or eNodeB) in LTE, a relay station or an access point, a vehicle-mounted device, a wearable device, a next-generation NodeB (next generation NodeB, gNB) in a 5G system, a base station in a future evolved PLMN network, or the like.

Terms used in embodiments of this application are described below.

### 1. Sidelink (sidelink, SL) communication

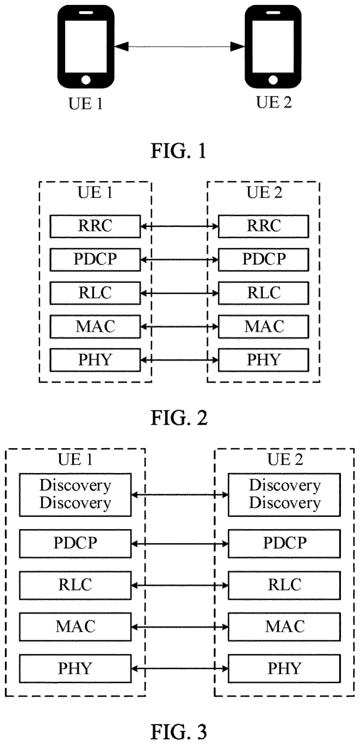

In a wireless communication system, terminal devices may perform data communication with each other via a network device, or the terminal devices may directly perform communication with each other without the network device. The communication for data transmission between the terminal devices without the network device may be referred to as sidelink communication. For example, FIG. 1 is a diagram of an architecture of a communication system according to an embodiment of this application. In sidelink communication, the communication system may include at least two terminal devices. For example, FIG. 1 shows two terminal devices: a UE 1 and a UE 2. An interface between the UE 1 and the UE 2 is referred to as a PCS interface, and a communication link between the UE 1 and the UE 2 is referred to as a sidelink. Data transmission may be directly performed between the UE 1 and the UE 2 through the sidelink but not via a network, so that a communication delay can be effectively reduced. For example, an application scenario of a sidelink communication system may be vehicle-to-everything (vehicle-to-everything, V2X). In the V2X, each vehicle is a terminal device, and data transmission may be directly performed between vehicles through a sidelink.

For example, refer to FIG. 2. FIG. 2 is a diagram of a control plane protocol architecture in sidelink communication. As shown in FIG. 2, peer protocol layers established between a UE 1 and a UE 2 include radio resource control (radio resource control, RRC) layers, packet data convergence protocol (packet data convergence protocol, PDCP) layers, radio link control (radio link control, RLC) layers, media access control (media access control, MAC) layers, and physical layer (physical layer, PHY) layers. On a control plane, the UE 1 encapsulates an RRC message generated at the RRC layer in a PDCP protocol data unit (protocol data unit, PDU), which is sent to the UE 2 after processing is sequentially performed at the RLC layer, the MAC layer, and the PHY layer. The UE 2 obtains a PDCP PDU after sequentially performing processing at the PHY layer, the MAC layer, and the RLC layer.

For example, the sidelink communication may support several communication modes: broadcast, unicast, and multicast.

The broadcast communication may be similar to broadcasting system information by a network device. To be specific, a sending terminal sends broadcast service data to the outside without encryption, and another terminal device that is within an effective receiving range of the sending terminal and that is interested in the broadcast service can receive the broadcast service data.

In unicast communication, a unicast connection needs to be first established between two terminal devices. This is similar to data communication performed after an RRC connection is established between a terminal device and a network device. After the unicast connection is established, the two terminal devices may perform data communication based on a negotiated identifier, and the data may be encrypted or may not be encrypted. Compared with the broadcast communication, in the unicast communication, the unicast communication can be performed between only two UEs between which the unicast connection is established.

The multicast communication refers to communication between all terminal devices in a communication group. In the multicast communication, any terminal device in a communication group may receive or send multicast service data. For example, a terminal device in a communication group sends one piece of multicast service data, and another terminal device in the communication group may receive the multicast service data. The terminal device may further receive multicast service data sent by the another terminal device in the communication group.

It should be understood that the foregoing communication modes supported by the sidelink are merely examples. The communication modes supported by the sidelink in embodiments of this application are not limited to the foregoing three examples, and may further include another new communication mode emerging with development of technologies. Therefore, the three communication modes shown above should not be understood as a limitation on implementation of this application.

In the sidelink communication, one-time sidelink communication corresponds to one pair of source layer-2 identifier (source layer-2 identifier, L2 ID) and destination L2 ID. In other words, the source L2 ID and the destination L2 ID are needed in the one-time sidelink communication. The source L2 ID and the destination L2 ID may be included in a subheader of a MAC data protocol unit (protocol data unit, PDU), so that data can be transmitted from a sending terminal to a correct receiving terminal.

For example, the source L2 ID is allocated by the sending terminal (or referred to as a source terminal). For example, the sending terminal may select different source L2 IDs based on a communication type and a standard. The communication type may include unicast communication, broadcast communication, and multicast communication, and the standard may include long term evolution (long term evolution, LTE) or new radio (new radio, NR). In some implementations, the sending terminal may periodically update the source L2 ID, to perform privacy protection on a sidelink service type (service type), so as to prevent another terminal device from tracking and identifying the sidelink service type.

For example, the destination L2 ID may depend on the service type. The sending terminal may determine a correspondence between the destination L2 ID and a broadcast service, a multicast service, or a unicast service based on a preconfiguration, an application layer server configuration, a core network configuration, or the like. For example, in a broadcast communication process or a multicast communication process, the sending terminal may determine the destination L2 ID based on a broadcast service type or a multicast service type. In unicast communication, the sending terminal first establishes a unicast connection to the receiving terminal (or referred to as a destination terminal). For example, in a unicast connection establishment process, the sending terminal may select a default destination L2 ID. The default destination L2 ID is related to a service type of the unicast communication. After the unicast connection is established, the sending terminal may continue using the default destination L2 ID to perform unicast communication.

For example, a terminal device that supports a proximity-based service (proximity-based service, ProSe) may discover, by performing a discovery process, a surrounding terminal device to which the terminal device can be connected, and establish a unicast connection to the terminal device, to subsequently perform communication based on the unicast connection.

### (1) Discovery process

A protocol stack of a discovery message is shown in FIG. 3. Peer protocol layers established between a UE 1 and a UE 2 include discovery (discovery) protocol layers, PDCP layers, RLC layers, MAC layers, and PHY layers. A discovery message of the UE 1 may be generated at the discovery protocol layer, and is sent to the UE 2 after being sequentially processed at the PDCP layer, the RLC layer, the MAC layer, and the PHY layer. The UE 2 obtains the discovery message after sequentially performing processing at the PHY layer, the MAC layer, the RLC layer, and the PDCP layer.

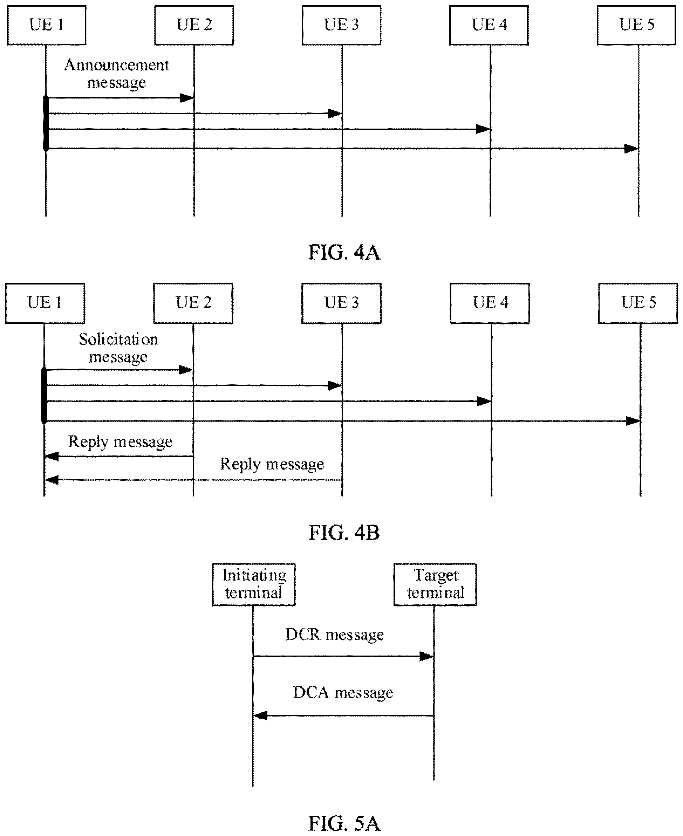

For example, the foregoing discovery process may include two discovery models: a first discovery model and a second discovery model. For example, in the first discovery model, terminal devices may include an announcing terminal (announcing UE) and a monitoring terminal (monitoring UE). The announcing terminal broadcasts a discovery message. The discovery message may carry a source L2 ID and a destination L2 ID. For example, the source L2 ID may be allocated by the announcing terminal, and the destination L2 ID may be a predefined or preconfigured destination L2 ID. The discovery message may also be referred to as an announcement message (announcement message), and the announcement message may carry information about the announcing terminal. For example, the announcement message may include information about a service type, indicating a type of a service that can be provided by the announcing terminal, so that the monitoring terminal determines, based on the announcement message, whether the service provided by the announcing terminal is needed. The monitoring terminal monitors the announcement message broadcast by the announcing terminal. After receiving the announcement message broadcast by the announcement terminal, the monitoring terminal may determine, based on the information carried in the announcement message, whether the service provided by the announcement terminal is needed, in other words, determine whether to establish a unicast connection to the announcement terminal. FIG. 4A is an example of the first discovery model according to an embodiment of this application. The first discovery model may include a plurality of terminal devices. FIG. 4A shows five terminal devices: a UE 1, a UE 2, a UE 3, a UE 4, and a UE 5. The UE 1 is an announcing terminal, and the UE 2, the UE 3, the UE 4, and the UE 5 are monitoring terminals. The UE 1 broadcasts an announcement message. The UE 2, the UE 3, the UE 4, and the UE 5 monitor the announcement message, and after receiving the announcement message, determine, based on information carried in the announcement message, whether to establish unicast connections to the UE 1.

For example, in the second discovery model, terminal devices may include a discoverer terminal (discoverer UE) and a discovered terminal (discovered UE). The discoverer terminal may broadcast a discovery message. The discovery message may carry a source L2 ID and a destination L2 ID. For example, the source L2 ID may be allocated by the discoverer terminal, and the destination L2 ID may be a predefined or preconfigured destination L2 ID. The discovery message may also be referred to as a solicitation message (solicitation message), and the solicitation message carries information about a service type needed by the discoverer terminal. The discovered terminal monitors the solicitation message broadcast by the discoverer terminal, and when receiving the solicitation message, determines whether a service needed by the discoverer terminal can be provided. When determining that the service needed by the discoverer terminal can be provided, the discovered terminal sends a reply message to the discoverer terminal. FIG. 4B is an example of the second discovery model according to an embodiment of this application. The second discovery model may include a plurality of terminal devices. FIG. 4B shows five terminal devices: a UE 1, a UE 2, a UE 3, a UE 4, and a UE 5. The UE 1 is a discoverer terminal, and the UE 2, the UE 3, the UE 4, and the UE 5 are discovered terminals. The UE 1 broadcasts a solicitation message. The solicitation message may include a service requirement of the UE 1. The UE 2, the UE 3, the UE 4, and the UE 5 monitor the solicitation message, and after receiving the solicitation message, determine, based on information carried in the solicitation message, whether the service requirement of the UE 1 is met. For example, if determining that the service requirement of the UE 1 is met, the UE 2 and the UE 3 send reply messages to the UE 1. After receiving the reply messages sent by the UE 2 and the UE 3, the UE 1 may select one of the UE 2 and the UE 3 to establish a unicast connection.

It should be understood that the two discovery models of the foregoing discovery process are merely examples. Discovery models of the discovery process in embodiments of this application are not limited to the foregoing two examples, and may further include another new discovery model that emerges with development of technologies. Therefore, the two discovery models shown above should not be understood as a limitation on implementation of this application.

### (2) Unicast connection establishment

For example, in a unicast connection establishment process, a terminal device that initiates a unicast connection establishment procedure may be referred to as an initiating terminal (initiating UE), for example, the monitoring terminal in the first discovery model and the discoverer terminal in the second discovery model. A peer end of the initiating terminal may be referred to as a target terminal (target UE), for example, the announcing terminal in the first discovery model and the discovered terminal in the second discovery model. For example, after the discovery process, the initiating terminal may determine a target terminal to which a unicast connection can be established, and initiate the unicast connection establishment procedure.

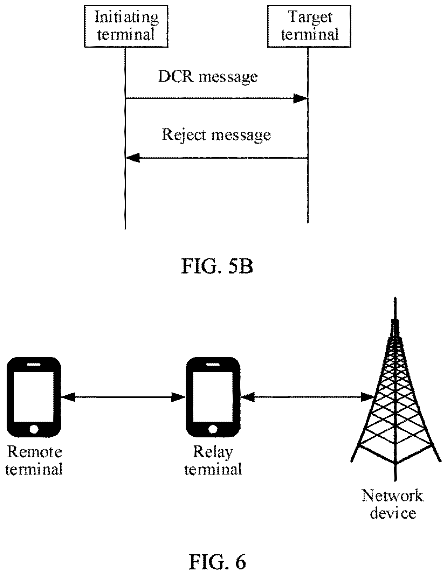

For example, after the discovery process, the initiating terminal may determine a source L2 ID for the unicast connection and a destination L2 ID of the target terminal. For example, the destination L2 ID may be obtained based on the discovery process. After determining the source L2 ID and the destination L2 ID, the initiating terminal sends a unicast connection establishment request (direct communication request, DCR) message to the target terminal. The DCR message may carry the source L2 ID, the destination L2 ID, and user information (User Info). After receiving the DCR message, the target terminal stores the source L2 ID and the destination L2 ID, and associates the source L2 ID and the destination L2 ID with a current unicast connection context. For example, the target terminal may determine, based on the user information included in the DCR message, whether to accept the unicast connection establishment request of the initiating terminal. If determining to accept the unicast connection establishment request, the target terminal sends a unicast connection accept (direct communication accept, DCA) message (as shown in FIG. 5A) to the initiating terminal. If determining not to accept the unicast connection establishment request, the target terminal sends a unicast connection reject (direct communication reject) message (as shown in FIG. 5B) to the initiating terminal.

### 2. Measurement reporting

For example, when a terminal device accesses a network device, the network device may send a configuration message to the terminal device. The configuration message may include information such as a measurement object, a measurement reporting configuration, a measurement gap (GAP), and a measurement identifier (identifier, ID). The measurement gap is a time segment in which the terminal device leaves a current frequency and performs measurement at another frequency. The terminal device may measure signal quality of a serving cell of the terminal device and signal quality of a surrounding cell based on the configuration message, and perform measurement reporting when the measured signal quality meets a measurement reporting condition configured in the configuration message, to report a measurement result to the network device. The network device may indicate, based on the measurement result, the terminal device to perform cell change. To be specific, the network device may indicate, based on the signal quality of the serving cell and the signal quality of the surrounding cell, the terminal device to perform the cell change.

For example, the configuration message may include at least one measurement object. The at least one measurement object is an object on which the terminal device performs measurement, and each of the at least one measurement object may correspond to one measurement object ID (Measobjectvield). For example, the configuration message may include configuration information of the at least one measurement object. An NR measurement object is used as an example. Configuration information of the NR measurement object may include information such as a synchronization signal and physical broadcast channel (physical broadcast channel, PBCH) block (synchronization signal and PBCH block, SSB) frequency, an SSB subcarrier spacing, an SSB-based measurement timing configuration (SSB-based measurement timing configuration, SMTC) configuration, a whitelist cell and a blacklist cell, and a frequency and an identifier of a cell. For example, when an SSB signal received by the terminal device meets the configuration information of the NR measurement object, it is determined that the SSB signal is the measurement object. In other words, the terminal device may measure the SSB signal. For example, the configuration message may be an RRC reconfiguration message (RRCReconfiguration message), and the at least one measurement object may be included in a measurement object list (measObjectiveToAddModList) of an information element measconfig of the RRC reconfiguration message.

For example, the configuration message may include at least one measurement reporting configuration, and each of the at least one measurement reporting configuration may include a standard (namely, a measurement reporting condition) for triggering reporting of a measurement report and a format of the measurement report. For example, each of the at least one measurement reporting configuration corresponds to one measurement reporting event, and is associated with one measurement object. For example, a measurement report corresponding to the NR measurement object may include a measurement result of the SSB. For example, any one of the at least one measurement reporting configuration has one configuration identifier (reportConfigId). For example, the configuration message may be an RRC reconfiguration message, and the at least one measurement reporting configuration is included in an information element reportConfigToAddModList of the RRC reconfiguration message.

For example, based on different trigger types, the at least one measurement reporting configuration may be classified into event-triggered reporting and periodicity-triggered reporting.

For example, for a measurement reporting configuration of event-triggered reporting, the measurement reporting configuration may include an event type, a threshold, duration in which a trigger condition is met, a measurement quantity, a reference signal type, and the like of a measurement reporting event corresponding to the measurement reporting configuration. A trigger quantity of the measurement reporting event is an indicator of the measurement reporting event. The trigger quantity may include reference signal received power (reference signal received power, RSRP), a received signal strength indicator (received signal strength indicator, RSSI), reference signal received quality (reference signal received quality, RSRQ), and a signal to interference plus noise ratio (signal to interference plus noise ratio, SINR). When detecting, through measurement, that the trigger quantity meets a trigger threshold of the measurement reporting event, the terminal device triggers measurement reporting corresponding to the measurement reporting event. For example, in a change process of a Uu interface, that is, in a change process of a serving cell of the terminal device, the trigger quantity of the measurement reporting event may be the RSRP or the RSRQ. For example, the terminal device may determine, by measuring the RSRP of the SSB signal or the RSRQ of the SSB signal, whether to trigger the measurement reporting corresponding to the measurement reporting event.

For example, when the network device performs the measurement reporting configuration of event-triggered reporting on the terminal device, the network device may correspondingly configure an entry threshold and an exit threshold of a measurement reporting event corresponding to the measurement reporting configuration. For example, an entry threshold condition of a measurement reporting event Al (Event A1) is Ms-Hys>Thresh, and the condition lasts for TimeToTriger duration, where Ms is a measurement result of a serving cell, Hys is hysteresis of the measurement result, and Thresh is a threshold. When the terminal device meets the entry threshold of the measurement reporting event, the terminal device records a measurement object corresponding to the measurement reporting event in a measurement variable (VarMeasReportList) of the terminal device, to form a measurement entry corresponding to the measurement object. The measurement variable is used to record related measurement information of a triggered measurement reporting condition. The measurement entry may include a measurement ID, and may be associated with the measurement object that triggers the measurement reporting condition and a measurement result thereof. After forming the measurement entry, the terminal device generates a measurement report, where the measurement report includes the foregoing measurement ID or the measurement result associated with the measurement object, and reports the measurement report to the network device. The measurement variable may include measurement entries corresponding to a plurality of measurement objects. The measurement report includes the measurement variable, and a format of the measurement report is determined based on the measurement reporting configuration corresponding to the measurement reporting event. For example, the terminal device may report the measurement report to the network device based on the measurement reporting configuration corresponding to the measurement reporting event. For example, the terminal device may report the measurement report to the network device by using a measurement report (MeasurementReport) message. The measurement report includes the measurement object corresponding to the measurement entry in the measurement variable of the terminal device and the measurement result thereof.

For example, the network device configures that an event-triggered reporting manner may include event-triggered one-time reporting and event-triggered periodic reporting. For example, for the event-triggered one-time reporting, when the terminal device meets the entry threshold of the measurement reporting event and maintains the situation for a period of time, the terminal device triggers reporting of only a one-time measurement report. For the event-triggered periodic reporting, after measurement reporting of the terminal device is triggered, the terminal device starts a timer (reportInterval) between a plurality of times of measurement and a counter (reportAmount) for a quantity of the measurement. Both the timer and the counter are configured by the network device. When the counter reaches a requirement on a quantity of times of reporting, the terminal device stops reporting, and completes a measurement reporting procedure corresponding to the measurement reporting event. When the counter is infinity (infinity), the terminal device periodically reports a measurement result.

For example, when the terminal device meets the exit threshold of the measurement reporting event, the terminal device may delete a corresponding measurement entry from the measurement variable. For example, when the terminal device detects, through measurement, that a measurement object meets the exit threshold of the measurement reporting event, the terminal device may delete a measurement entry corresponding to the measurement object from the measurement variable. In other words, when the terminal device performs measurement reporting next time, a reported measurement result no longer includes a measurement result of the measurement object.

For example, when the network device performs the measurement reporting configuration of periodicity-triggered reporting on the terminal device, the terminal device may send a measurement report based on a report interval (reportInterval) configured by the network device. A measurement object corresponding to the measurement reporting configuration is always recorded in the measurement variable of the terminal device. To be specific, a measurement result corresponding to the measurement object is sent to the network device each time measurement reporting is performed.

For example, the foregoing configuration message further includes at least one measurement ID, and the measurement ID is used to associate the measurement object with the measurement reporting configuration. The terminal device may determine a correspondence between the measurement object and the measurement reporting configuration based on the measurement ID, and measure the measurement object based on a requirement of the measurement reporting configuration corresponding to the measurement object. For example, the at least one measurement ID may be included in an information element measObjectiveToAddModList of the RRC reconfiguration message.

### 3. User equipment-to-network relay (UE-to-Network Relay, U2N Relay) technology

For example, the U2N relay technology is a technology in which a terminal device helps another terminal device communicate with a network device, or the U2N relay technology is a technology in which the terminal device communicates with the network device via the another terminal device. The U2N relay technology may also be referred to as a relay technology. In a U2N relay communication architecture, terminal devices may be classified into a remote terminal (remote UE) and a relay terminal (relay UE). The remote terminal may communicate with a network device via the relay terminal. FIG. 6 is an example of a U2N relay communication architecture according to an embodiment of this application. FIG. 6 shows a remote terminal, a relay terminal, and a network device. The remote terminal communicates with the network device via the relay terminal. The remote terminal communicates with the relay terminal through a sidelink, and a corresponding interface is referred to as PC5. The relay terminal is directly connected to the network device, that is, communicates with the network device through a Uu interface. For example, a direct communication link between the relay terminal and the network device may be referred to as a direct link.

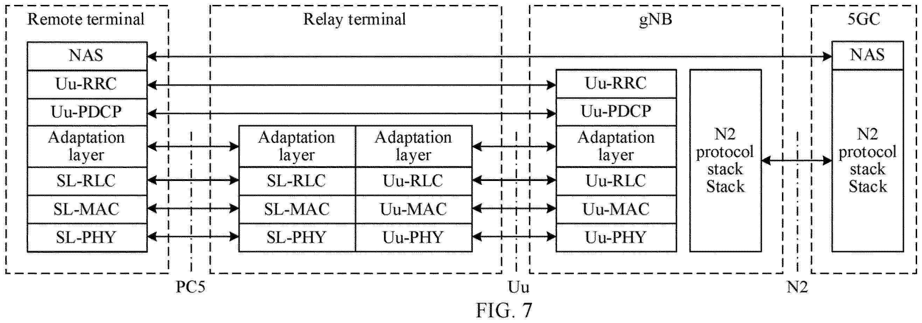

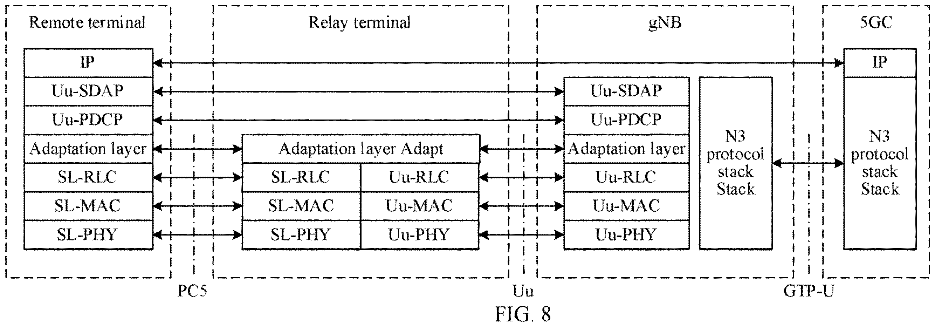

For example, refer to FIG. 7 and FIG. 8. FIG. 7 is a diagram of a control plane protocol architecture in the U2N relay communication architecture, and FIG. 8 is a diagram of a user plane protocol architecture in the U2N relay communication architecture.

For example, the control plane protocol stack architecture shown in FIG. 7 and the user plane protocol stack architecture shown in FIG. 8 are applicable to an L2 U2N relay scenario. For a control plane, as shown in FIG. 7, a PCS interface is established between the remote terminal and the relay terminal, and end-to-end protocol layers include adaptation layers (Adaptation layer, Adapt), RLC layers, MAC layers, and PHY layers. A Uu interface is established between the relay terminal and the network device (namely, a gNB), and end-to-end protocol layers include adaptation layers, RLC layers, MAC layers, and PHY layers. An N2 interface is established between the network device and a core network, and end-to-end protocol layers include N2 interface protocol stacks (N2 Stacks). In addition, there are end-to-end protocol layers between the remote terminal and the network device, including RRC layers and PDCP layers. There are end-to-end protocol layers between the remote terminal and the core network (SG Core Network, 5GC), including non-access stratum (non-access stratum, NAS) layers.

For a user plane, a PCS interface is established between the remote terminal and the relay terminal, and end-to-end protocol layers include adaptation layers, RLC layers, MAC layers, and PHY layers. A Uu interface is established between the relay terminal and the network device, and end-to-end protocol layers include adaptation layers, RLC layers, MAC layers, and PHY layers. A general packet radio service (general packet radio service, GPRS) tunneling protocol user plane (GPRS tunnelling protocol user plane, GTP-U) interface is established between the network device and the core network, and end-to-end protocol layers include N3 stacks. In addition, end-to-end protocol layers, including service data adaptation protocol (service data adaptation protocol, SDAP) layers and PDCP layers, are established between the remote terminal and the network device. There are end-to-end protocol layers between the remote terminal and the core network, including internet protocol (internet protocol, IP) layers.

For example, a data packet of the remote terminal is relayed and forwarded below the PDCP layer of the relay terminal. To be specific, the relay terminal maintains a relayed RLC bearer, including the RLC layer, the MAC layer, and the PHY layer. In addition, in the U2N relay communication architecture, in the control plane protocol architecture and the user plane protocol architecture, adaptation layers (Adaptation layers) are added between the RLC layers and the PDCP layers. A main function of the adaptation layer is multiplexing and splitting of a radio bearer. To be specific, the adaptation layer supports multiplexing of data from different PDCP entities onto one RLC bearer, or splitting of data on one RLC bearer onto different radio bearers.

For example, in an L3 U2N relay communication architecture, a data packet of a remote terminal is relayed and forwarded at an internet protocol (internet protocol, IP) layer of a relay terminal, where the IP layer is above an access stratum (access stratum, AS) layer. To be specific, the IP layer is above an SDAP layer, a PDCP layer, an adaptation layer, an RLC layer, a MAC layer, and a PHY layer. Therefore, there are end-to-end IP layers, SDAP layers, PDCP layers, adaptation layers, RLC layers, MAC layers, and PHY layers between the remote terminal and the relay terminal, there are end-to-end IP layers, SDAP layers, PDCP layers, adaptation layers, RLC layers, MAC layers, and PHY layers between the relay terminal and a network device, and there are no end-to-end protocol layers between the network device and the remote terminal.

For ease of description, in embodiments of this application, a relay device that provides a relay service for a remote terminal may be referred to as a serving relay device of the remote terminal, and a relay device that does not provide the relay service for the remote terminal may be referred to as a surrounding relay device.

For example, the remote terminal may measure signal quality of a surrounding cell and signal quality of the surrounding relay device, and perform mobility management based on measured signal quality, so that the remote terminal can continuously enjoy a network service in a movement process. For example, the mobility management of the remote terminal may include the following several cases.

### Case 1: Direct-to-indirect (direct-to-indirect) communication switch

The direct-to-indirect communication switch means that the remote terminal switches from directly communicating with the network device to communicating with the network device via the relay device. For example, the remote terminal is in an RRC connected state (RRC_CONNECTED). When directly communicating with the network device, the remote terminal may measure, based on a configuration message of the network device, signal quality of a current serving cell and signal quality of a sidelink between the remote terminal and the surrounding relay terminal, and perform measurement reporting based on the configuration message, to report a measurement result to the network device. Then, the network device indicates, based on the measurement result reported by the remote terminal, the remote terminal to switch to a target relay terminal, to obtain a relay service via the target relay terminal, so as to access a target base station of the target relay terminal. For example, when the remote terminal accesses the network device, the network device sends a configuration message to the remote terminal. The configuration message is used to perform measurement reporting configuration on the remote terminal. For example, the configuration message may configure, for the remote terminal, a reporting condition for triggering measurement reporting. When the reporting condition is met, the remote terminal triggers the measurement reporting, to report the measurement result to the network device. For example, the configuration message may be specifically an RRC reconfiguration (RRCReconfiguration) message.

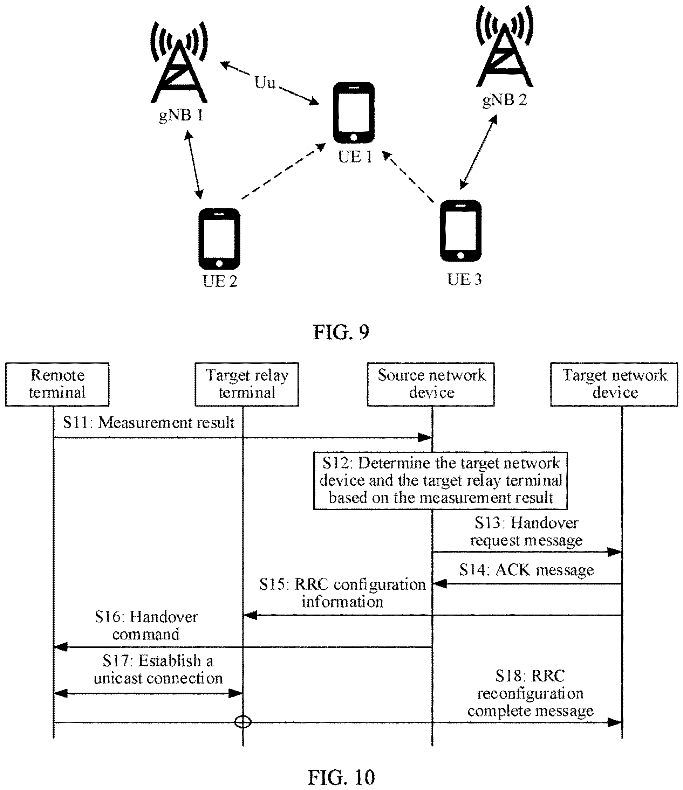

For example, FIG. 9 is an example of a direct-to-indirection communication switch scenario. In FIG. 9, three terminal devices (namely, a UE 1, a UE 2, and a UE 3) and two network devices (namely, a gNB 1 and a gNB 2) are used as an example. The UE 1 is a remote terminal, and the UE 2 and the UE 3 are surrounding relay terminals of the UE 1. The UE 1 directly communicates with the gNB 1 through a Uu interface, the UE 2 directly communicates with the gNB 1, and the UE 3 directly communicates with the gNB 2. For example, the UE 2 and the UE 3 broadcast discovery messages. The UE 1 may measure signal quality of a sidelink between the UE 1 and the UE 2 based on the discovery message broadcast by the UE 2, and measure signal quality of a sidelink between the UE 1 and the UE 3 based on the discovery message broadcast by the UE 3. When the signal quality measured by the UE 1 meets the reporting condition in the measurement configuration, the UE 1 triggers measurement recording and reporting, to report a measurement result to the gNB 1. The gNB 1 may indicate, based on the measurement result reported by the UE 1, the UE 1 to switch to the UE 2 or the UE 3, to access the gNB 1 or the gNB 2 via the UE 2 or the UE 3.

For example, in the direct-to-indirection communication switch scenario, the network device may configure a measurement reporting event Y (Event Y) for the remote terminal by using the configuration message, to limit a measurement reporting behavior of the remote terminal. For example, the measurement reporting event Y may be defined as follows: When signal quality of a current serving cell of the remote terminal is less than a threshold Y1, and signal quality of a surrounding optional relay terminal on a sidelink is greater than a threshold Y2, the measurement reporting is triggered.

For example, an entry condition of the measurement reporting event Y may be: (Mn+Hys<ThreshY1) and (Mr-Hys>ThreshY2), and the condition lasts for TimeToTrigger duration. Mn is the signal quality of the serving cell, Mr is the signal quality of the surrounding relay terminal on the sidelink, Hys is hysteresis of the measurement result, TimeToTrigger indicates duration in which the entry condition of the measurement reporting event is continuously met, namely, time-to-trigger, and ThreshY 1 corresponds to the threshold Y1 in the measurement reporting event Y When the remote terminal meets the condition (Mn+Hys<ThreshY1) and (Mr-Hys>ThreshY2), and the duration in which the condition is continuously met is greater than or equal to the TimeToTrigger duration, it is determined that the entry condition of the measurement reporting event is met, and the measurement reporting is triggered.

For example, an exit condition of the measurement reporting event Y may be: (Mn+Hys>ThreshY 1) or (Mr-Hys<ThreshY2), and the condition lasts for TimeToTrigger duration. ThreshY2 corresponds to the threshold Y2. When duration in which the remote terminal meets the condition (Mn+Hys>ThreshY1) or (Mr-Hys<ThreshY2) is greater than or equal to the TimeToTrigger duration, the exit condition of the measurement reporting event Y is met.

For example, the signal quality of the sidelink in the measurement reporting event Y may be SD-RSRP. To be specific, the remote terminal obtains the signal quality of the sidelink between the remote terminal and the surrounding relay terminal by receiving and measuring a discovery message sent by the surrounding relay terminal. When the terminal device meets the entry condition of the measurement reporting event Y, that is, the signal quality of the serving cell of the terminal device is less than the threshold Y1 and the SD-RSRP of the surrounding relay terminal is greater than the threshold Y2, the remote terminal may perform measurement recording, that is, the remote terminal records a measurement object corresponding to the surrounding relay terminal in a measurement variable of the remote terminal, and performs the measurement reporting based on the measurement reporting configuration corresponding to the measurement reporting event Y. For example, the measurement result reported by the remote terminal may include ID information of the surrounding relay terminal, ID information of a serving cell of the surrounding relay terminal, and the signal quality of the sidelink between the remote terminal and the relay terminal.

For example, when the measurement result of the remote terminal meets the exit condition of the measurement reporting event Y, the remote terminal may delete a measurement object corresponding to the measurement reporting event Y from the measurement variable.

For example, after receiving the measurement result reported by the remote terminal, the network device makes a corresponding handover decision based on the measurement result, and indicates the remote terminal to perform direct-to-indirect communication switch, that is, the remote terminal switches from direct communicating with the network device to communicating with the network device via the relay device. A specific procedure of the direct-to-indirect communication switch is shown in FIG. 10. The following describes steps in FIG. 10.

S 11: A remote terminal sends a measurement result to a source network device. The source network device is a network device that communicates with the remote terminal. The remote terminal may perform measurement reporting based on a measurement reporting configuration. The reported measurement result includes ID information of a surrounding relay terminal, ID information of a serving cell of the surrounding relay terminal, and signal quality of a sidelink of the surrounding relay terminal.

S12: The source network device determines a target network device and a target relay terminal based on the measurement result.

S13: The source network device sends a handover request message to the target network device.

S 14: The target network device returns a handover acknowledgment (acknowledgment, ACK) message to the source network device.

S 15: The target network device sends RRC configuration information to the target relay terminal. The RRC configuration message includes an air interface configuration needed by the target relay terminal to provide a relay service for the remote terminal and identification information of the remote terminal. After receiving the RRC configuration message, the target relay terminal may return a complete (complete) message to the target network device.

S16: The source network device sends a handover command (handover command, HO command) to the remote terminal. The handover command includes a configuration needed by the remote terminal to access the target network device via the target relay terminal and identification information of the target relay terminal device.

S17: The remote terminal establishes a unicast connection to the target relay terminal.

S 18: The remote terminal returns an RRC reconfiguration complete (ReconfigurationComplete) message to the target network device via the target relay terminal. The RRC reconfiguration complete message indicates that switch is completed.

It should be understood that, in a process of the direct-to-indirect communication switch, the source network device and the target network device may alternatively be a same network device, that is, intra-site switch is performed. When the intra-site switch is performed, step S13 and step S14 may not be performed.

In this case, the remote terminal may measure signal quality of a sidelink between the remote terminal and the relay terminal by receiving and measuring a discovery message sent by the surrounding relay terminal. For example, the remote terminal may measure the signal quality of the sidelink between the remote terminal and the surrounding relay terminal by measuring RSRP of the discovery message sent by the relay terminal. The signal quality that is of the sidelink and that is obtained by the remote terminal by measuring the RSRP of the discovery message sent by the surrounding relay terminal may be referred to as SD-RSRP. In a U2N relay communication architecture, the relay terminal sends the discovery message when signal quality of the relay terminal on a Uu interface between the relay terminal and the network device meets a threshold condition. To be specific, the relay terminal sends the discovery message when the signal quality of the relay terminal on the Uu interface is between a minimum threshold and a maximum threshold. The minimum threshold and the maximum threshold may be configured by the network device. When the relay terminal does not meet the foregoing threshold condition, the relay terminal does not provide the relay service, and therefore stops sending the discovery message. For example, the signal quality of the relay terminal on the Uu interface between the relay terminal and the network device may be referred to as Uu-RSRP of the relay terminal.

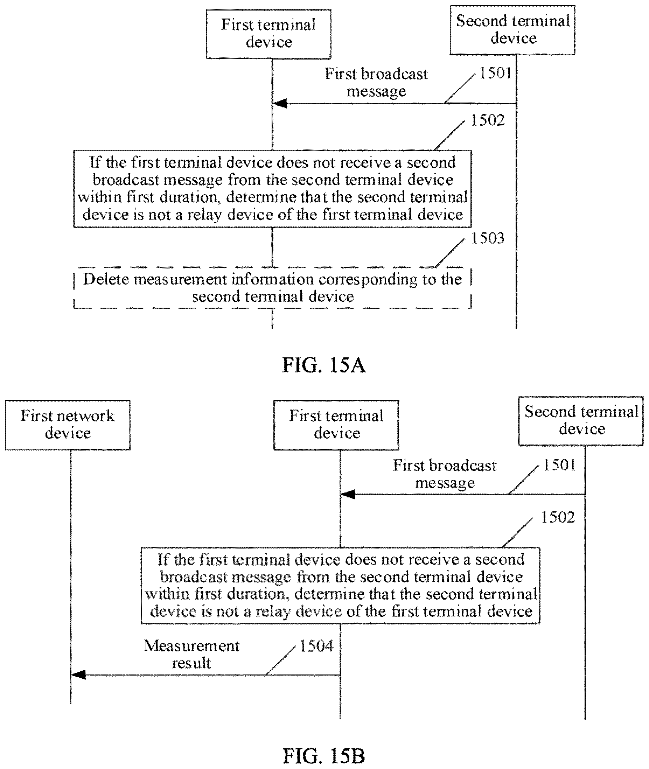

For a surrounding relay terminal, when Uu-RSRP of the surrounding relay terminal meets the foregoing threshold condition, a discovery message is periodically sent. The remote terminal may detect SD-RSRP of the surrounding relay terminal based on the discovery message. When the SD-RSRP of the surrounding relay terminal meets the entry condition of the measurement reporting event Y, the surrounding relay terminal is added to the measurement variable to form a measurement entry corresponding to the surrounding relay terminal, and corresponding measurement reporting is performed. After a period of time, if the Uu-RSRP of the surrounding relay terminal no longer meets the threshold condition, sending of the discovery message stops. If the remote terminal no longer receives the discovery message of the surrounding relay terminal, the SD-RSRP of the surrounding relay terminal cannot be measured. In this case, the remote terminal cannot determine, based on the SD-RSRP of the surrounding relay terminal, whether the surrounding relay terminal meets the entry condition or the exit condition of the measurement reporting event Y Therefore, the measurement entry corresponding to the surrounding relay terminal is retained in the measurement variable of the remote terminal. In addition, a measurement result reported by the remote terminal when measurement reporting is triggered next time (where for example, when the measurement reporting is triggered if another measurement object meets an entry condition of a measurement reporting event corresponding to the remote terminal) still includes the measurement entry. For example, when the surrounding relay terminal no longer provides a relay service, the remote terminal still reports the measurement entry corresponding to the surrounding relay terminal. As a result, a reported measurement result includes an inappropriate relay terminal. In view of this, an embodiment of this application provides a communication method, to resolve a problem that a measurement result reported by a remote terminal includes an inappropriate relay terminal. For details, refer to related descriptions in FIG. 15A.

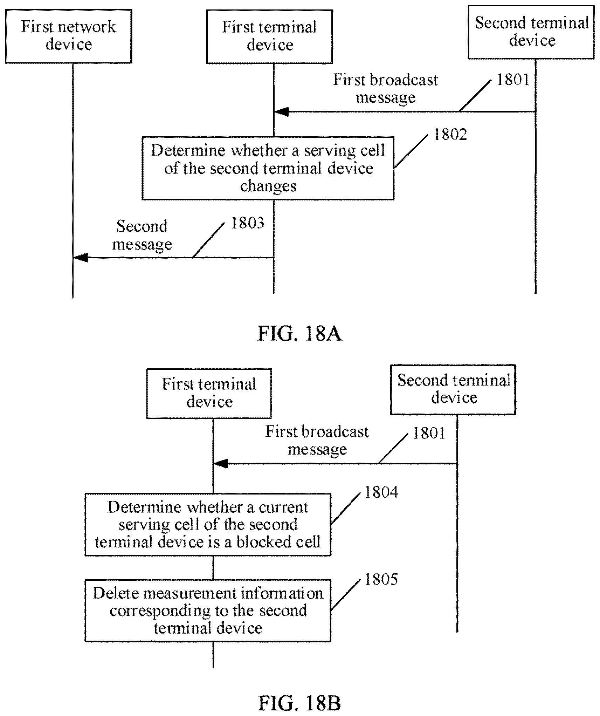

For a surrounding relay terminal, when SD-RSRP of the surrounding relay terminal meets the entry condition of the measurement reporting event Y, the remote terminal adds the surrounding relay terminal to the measurement variable to form a measurement entry corresponding to the surrounding relay terminal, and performs corresponding measurement reporting. After the remote terminal adds the surrounding relay terminal to the measurement variable and performs the measurement reporting, the surrounding relay terminal performs cell change. In this case, the network device cannot update cell information of the surrounding relay terminal in a timely manner. As a result, the remote terminal may fail in switching from the relay device. For example, the network device sends, based on cell information before the cell change of the surrounding relay terminal, a handover request to a network device before the cell change of the surrounding relay terminal, and the handover request is rejected by the network device before the cell change of the surrounding relay terminal. In view of this, an embodiment of this application provides a communication method, so that a network device can update cell information of a surrounding relay terminal in a timely manner, to prevent a relay device of a remote terminal from failing in switching to the surrounding relay terminal because the network device does not update the cell information of the surrounding relay terminal in a timely manner. For details, refer to related descriptions in FIG. 18A.

### Case 2: Indirect-to-direct (indirect-to-direct) communication switch

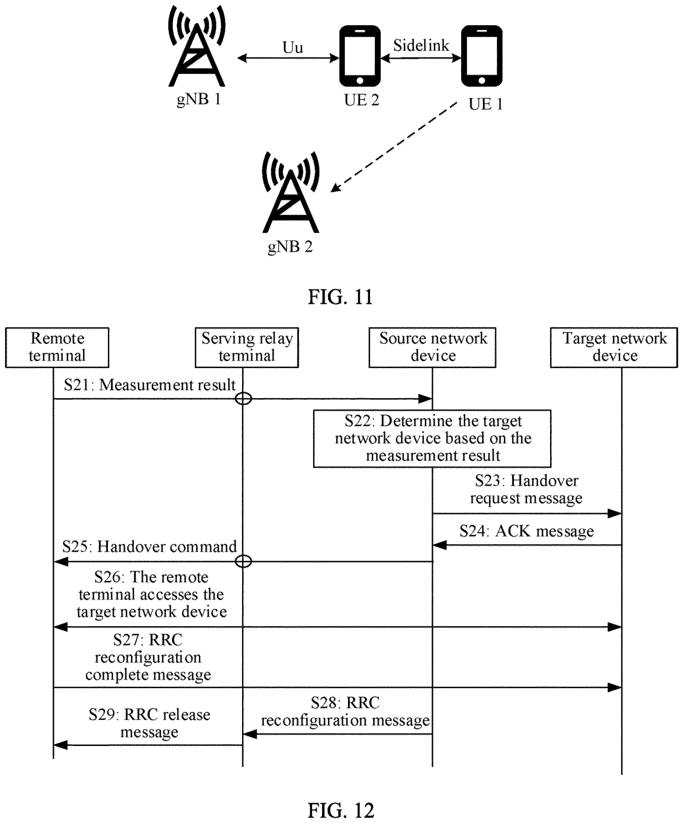

An indirect-to-direct communication switch process refers to a process in which the remote terminal switches from communicating with the network device via the relay terminal to directly communicating with the network device. For example, the remote terminal is in an RRC connected state. When communicating with the network device via a serving relay terminal of the remote terminal, the remote terminal may measure signal quality of a sidelink between the remote terminal and the serving relay terminal and signal quality of a surrounding cell based on the configuration message of the network device, and perform the measurement reporting based on the measurement reporting configuration in the configuration message. FIG. 11 is an example of an indirect-to-direct communication switch scenario according to an embodiment of this application. FIG. 11 shows two terminal devices (namely, a UE 1 and a UE 2) and two network devices (namely, a gNB 1 and a gNB 2). The UE 1 is a remote terminal, and the UE 2 is a relay terminal. The UE 1 communicates with the gNB 1 via the UE 2, the UE 2 communicates with the gNB 1 through a Uu interface, and the UE 1 communicates with the UE 2 through a sidelink. The UE 1 may receive a configuration message of the gNB 1 via the UE 2, and measure signal quality of the sidelink between the UE 1 and the UE 2 and signal quality of a surrounding cell of the UE 1 based on the configuration message. For example, the UE 1 may measure signal quality of a cell served by the gNB 1 and signal quality of a cell served by the gNB 2. When the signal quality measured by the UE 1 meets a reporting condition, the UE 1 performs measurement reporting, to send a measurement result to the gNB 1. The gNB 1 may indicate, based on the measurement result reported by the UE 1, the UE 1 to switch to an appropriate cell. For example, the gNB 1 may indicate the UE 1 to switch to the cell served by the gNB 2.

In the indirect-to-direct communication scenario, the network device may configure a measurement reporting event X (Event X) for the remote terminal, to limit a measurement reporting behavior of the remote terminal. For example, the measurement reporting event X may be defined as follows: When the signal quality of the sidelink between the remote terminal and the serving relay terminal is less than a threshold X1 and the signal quality of the surrounding cell is greater than a threshold X2, the measurement reporting is triggered.

For example, an entry condition of the measurement reporting event X may be (Mr+Hys<ThreshX1) and (Mn+Offset-Hys>ThreshX2), and the condition lasts for TimeToTrigger duration. Mr is the signal quality of the current serving relay terminal, Mn is the signal quality of the surrounding cell, Hys is hysteresis of the measurement result, TimeToTrigger indicates duration in which the entry condition of the event is continuously met, namely, time-to-trigger, and Offset indicates a frequency offset sum of a neighboring cell. Offset is a sum of Ofn and Ocn, where Ofn is a specific frequency offset of a measurement object in the cell, and Ocn is a cell-level offset. ThreshX1 corresponds to the threshold X1 in the measurement reporting event X. When the remote terminal meets the condition: (Mr+Hys<ThreshX1) and (Mn+Offset-Hys>ThreshX2), and the duration in which the condition is met is greater than or equal to the TimeToTrigger duration, the entry condition of the measurement reporting event is met, and the measurement reporting is triggered.

For example, an exit condition of the measurement reporting event X may be (Mr+Hys>ThreshX1) or (Mn+Offset-Hys<ThreshX2), and the condition lasts for TimeToTrigger duration. ThreshX2 corresponds to the threshold X2 in the measurement reporting event X. When duration in which the remote terminal meets the condition (Mr+Hys>ThreshX1) or (Mn+Offset-Hys<ThreshX2) is greater than or equal to the TimeToTrigger duration, the exit condition of the measurement reporting event Y is met.

For example, the signal quality of the sidelink between the remote terminal and the serving relay terminal in the measurement reporting event X may be SL-RSRP. To be specific, the remote terminal may obtain the signal quality of the sidelink between the remote terminal and the relay terminal by receiving and measuring data sent by the serving relay terminal. In some implementations, when there is no data transmission between the remote terminal and the serving relay terminal, the remote terminal may also obtain SD-RSRP by measuring a discovery message sent by the serving relay terminal, and use the SD-RSRP as the signal quality of the sidelink between the remote terminal and the serving relay terminal.

For example, when the signal quality of the sidelink between the remote terminal and the serving relay terminal and the signal quality of the surrounding cell meet the entry condition of the measurement reporting event X, the remote terminal performs measurement recording, that is, the remote terminal records a measurement object corresponding to the measurement reporting event X in a variable, and performs the measurement reporting based on a measurement reporting configuration of the measurement reporting event X, to report the measurement result to the network device. For example, the measurement result includes ID information of the surrounding cell and the signal quality of the surrounding cell.

For example, when the measurement result of the remote terminal meets the exit condition of the measurement reporting event X, the remote terminal deletes the measurement object corresponding to the measurement reporting event X from the measurement variable.

For example, after receiving the measurement result reported by the remote terminal, the network device makes a corresponding handover decision based on the measurement result, and indicates the remote terminal to perform indirect-to-direct communication switch, that is, the remote terminal switches from communicating with the network device via the relay device to directly communicating with the network device. A specific procedure of the indirect-to-direct communication switch is shown in FIG. 12. The following describes steps in FIG. 12.

S21: A remote terminal sends a measurement result to a source network device via a serving relay terminal. The measurement result includes ID information of a surrounding cell and signal quality of the surrounding cell.

S22: The source network device determines a target network device based on the measurement result.

S23: The source network device sends a handover request message to the target network device.

S24: The target network device returns a handover ACK message to the source network device.

S25: The source network device sends a handover command to the remote terminal via the serving relay terminal device, where the handover command includes a configuration needed by the remote terminal to access the target network device.

S26: The remote terminal accesses the target network device based on the handover command. For example, the remote terminal may access the target network device in a random access manner.

S27: The remote terminal returns an RRC reconfiguration complete message to the target network device. The RRC reconfiguration complete message indicates that switch is completed.

S28: The source network device sends an RRC reconfiguration message to the serving relay terminal. The RRC configuration message indicates the serving relay terminal to release a configuration related to the remote terminal, for example, an air interface configuration related to the remote terminal. Correspondingly, after S28, the relay device further returns an RRC reconfiguration complete message to the source network device.

S29: The serving relay terminal releases a unicast connection between the serving relay terminal and the remote terminal. It should be understood that the unicast connection may alternatively be released by the remote terminal.

It should be understood that, in a process of the indirect-to-direct communication switch, the source network device and the target network device may alternatively be a same network device, that is, intra-site switch is performed. When the intra-site switch is performed, step S23 and step S24 may not be performed.

In this case, the remote terminal may measure signal quality of a sidelink between the remote terminal and the serving relay terminal by receiving and measuring data that is sent by the serving relay terminal based on the unicast connection. For example, the remote terminal may measure the signal quality of the sidelink between the remote terminal and the serving relay terminal by measuring RSRP of the data sent by the serving relay terminal. The signal quality that is of the sidelink and that is obtained by the remote terminal by measuring the RSRP of the data sent by the serving relay terminal may be referred to as SL-RSRP. Alternatively, the remote terminal may measure the signal quality of the sidelink between the remote terminal and the serving relay terminal based on a discovery message broadcast by the serving relay terminal.

For example, when there is no data transmission on the unicast connection between the remote terminal and the serving relay terminal, the remote terminal may detect SD-RSRP of the serving relay terminal. For example, at a moment T, if Uu-RSRP of the serving relay terminal does not meet a threshold condition, sending of the discovery message stops. In addition, before the moment T, the SD-RSRP of the serving relay terminal does not meet the entry condition of the measurement reporting event X. The remote terminal cannot receive the discovery message sent by the serving relay terminal, and cannot determine whether the SD-RSRP of the serving relay terminal meets the entry condition of the measurement reporting event X. Therefore, the remote terminal does not trigger the measurement reporting. In this case, the serving relay terminal is no longer suitable to serve as a relay device of the remote terminal. According to a communication method provided in embodiments of this application, whether the serving relay terminal is suitable to continue serving as the relay device of the remote terminal can be determined, and the measurement reporting can be triggered when the serving relay terminal is no longer suitable to continue serving as the relay device of the remote terminal device, so that the relay device of the remote terminal can switch to an appropriate relay terminal in a timely manner. For a specific implementation of the communication method, refer to related descriptions in FIG. 15B.

### Case 3: Indirect-to-indirect communication switch

For example, the indirect-to-indirect communication switch means that the remote terminal switches from indirect communication to indirect communication, that is, a relay device within a range of the remote terminal changes from one relay terminal to another relay terminal. For example, the remote terminal is in a connected state. For example, the remote terminal may communicate with the network device via the current serving relay terminal, and receive the configuration message of the network device via the current serving relay terminal. For example, the configuration message may configure, for the remote terminal, a condition meeting measurement reporting. The remote terminal may measure signal quality of a sidelink between the remote terminal and the current serving relay terminal and signal quality of a sidelink between the remote terminal and the surrounding relay terminal based on the configuration message. When the signal quality measured by the remote terminal meets the measurement reporting condition configured in the configuration message, for example, sidelink signal quality of the serving relay terminal is less than a first specified threshold, and sidelink signal quality measured by the surrounding relay terminal is greater than a second specified threshold, the remote terminal triggers the measurement reporting, to report a measurement result to the network device. The first specified threshold and the second specified threshold may be set by the network device. For example, the network device may determine a target relay terminal based on the measurement result reported by the remote terminal, and indicate the remote terminal to switch from the current serving relay terminal to the target relay terminal. It should be understood that the current serving relay terminal and the target relay terminal may communicate with one network device, or may communicate with different network devices.

It may be understood that, for a specific procedure of the indirect-to-indirect communication switch, refer to the related descriptions of the direct-to-indirect communication switch and the related descriptions of the indirect-to-direct communication switch. Details are not described herein again.

### Case 4: Selection and reselection of a relay terminal

For example, when the remote terminal is in an idle state or an inactive state, the remote terminal may select and reselect a relay terminal. For example, when the remote terminal directly communicates with the network device, if the remote terminal detects that signal quality of the current serving cell is less than a third specified threshold, or receives indication information of the network device, the remote terminal may select the relay device. The third specified threshold may be configured by the network device, and the indication information indicates the remote terminal to select the relay device. When the remote terminal indirectly communicates with the network device via the serving relay terminal, if the remote terminal meets a trigger condition for reselecting the relay terminal, the remote terminal reselects the relay terminal. The trigger condition for reselecting the relay terminal may include one or more of the following: signal quality of a sidelink between the remote terminal and the current relay terminal is less than a fourth specified threshold, indication information of the network device is received, and sidelink communication fails. The fourth specified threshold may be configured by the network device, and the indication information indicates the remote terminal to reselect the relay device.

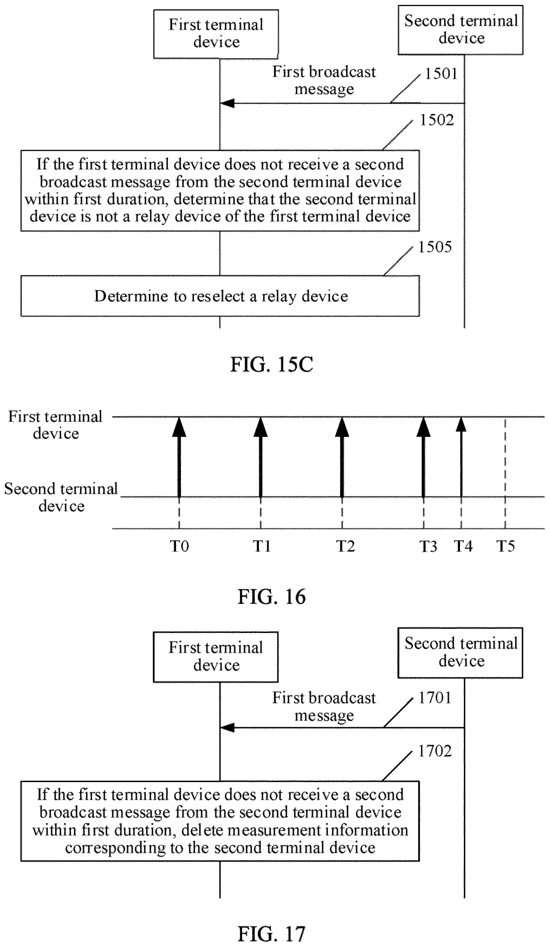

In this case, the remote terminal may detect SD-RSRP of the relay terminal based on a discovery message broadcast by the serving relay terminal, to determine whether to reselect the relay terminal. When Uu-RSRP of the serving relay terminal does not meet a threshold condition and sending of the discovery message stops, the remote terminal cannot detect the SD-RSRP of the serving relay terminal, and cannot determine whether need to reselect the relay device. Consequently, the remote terminal cannot reselect the relay terminal in a timely manner. In view of this, an embodiment of this application provides a communication method, so that a remote terminal can reselect a relay terminal in a timely manner. For a specific implementation of the communication method, refer to related descriptions in FIG. 15C.

It should be understood that the foregoing several switch scenarios: the direct-to-indirect communication switch, the indirect-to-direct communication switch, and the indirect-to-indirect communication switch are merely examples. During actual application, switch of the remote terminal may not be limited to the several scenarios shown above. For example, the remote terminal may measure both the signal quality of the sidelink between the remote terminal and the surrounding relay device and the signal quality of the surrounding cell, and report the measurement result to the network device when the measured signal quality meets the reporting condition. The network device may indicate, based on the measurement result reported by the remote terminal, the remote terminal to switch to the target relay terminal or the target cell. Therefore, the foregoing several switch scenarios should not be understood as a limitation on implementation of this application.

For example, in the first discovery model, a relay terminal that meets the foregoing Uu-RSRP threshold condition may periodically broadcast an announcement message (namely, a discovery message), and the remote terminal monitors and receives the announcement message of the surrounding relay terminal. In the second discovery model, the remote terminal may periodically broadcast a solicitation message. The solicitation message indicates that the remote terminal needs a relay service. After monitoring and receiving the solicitation message, if the foregoing threshold condition is met, the surrounding relay terminal sends a reply message (discovery message) to the remote terminal. The reply message indicates that the relay terminal can provide the relay service.

For example, the discovery message (announcement message or reply message) sent by the relay terminal may include a source L2 ID, a destination L2 ID, and serving cell information of the relay terminal, for example, identity document (identity document, ID) information of the serving cell.

### 4. Multi-path relaying (multi-path relaying)

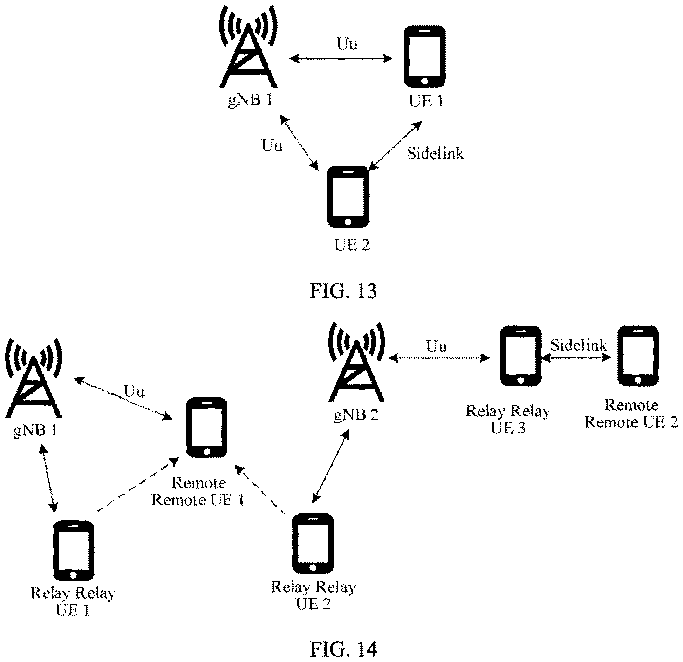

In a multi-path relaying communication architecture, there may be a plurality of connections between one remote terminal and a network device. In the multi-path relaying communication architecture, the remote terminal may simultaneously have a plurality of indirect communication connections, that is, the remote terminal may simultaneously establish connections to the network device via a plurality of relay terminals. When being connected to the network device through a Uu interface direct link, the remote terminal may further establish a connection to the network device via the relay terminal. FIG. 13 is an example of a multi-path relaying architecture. In FIG. 13, one remote terminal (namely, a UE 1), a relay terminal (namely, a UE 2), and a network device (namely, a gNB 1) are used as an example. The UE 1 may directly communicate with the gNB 1 through a Uu interface, and may indirectly communicate with the gNB 1 via the UE 2. It may be understood that the UE 1 may have a plurality of indirect communication connections to the network device via a plurality of relay terminals. FIG. 13 shows only one indirect communication connection. It should be understood that, in the multi-path relaying communication architecture, the remote terminal may establish connections to different network devices or a same network device through direct communication and indirect communication. This is not limited in this application.

FIG. 14 shows an example of a communication scenario of a U2N relay architecture. The communication scenario may include at least one remote terminal, at least one relay terminal, and at least one network device. In FIG. 14, two remote terminals, three relay terminals, and two network devices are used as an example. The two remote terminals are a remote UE 1 and a remote UE 2, the three relay terminals are a relay UE 1, a relay UE 2, and a relay UE 3, and the two network devices are a gNB 1 and a gNB 2. The remote UE 1 directly communicates with the gNB 1 through a Uu interface, the relay UE 1 directly communicates with the gNB 1 through a Uu interface, the relay UE 2 directly communicates with the gNB 2 through a Uu interface, and the relay UE 3 directly communicates with the gNB 2 through a Uu interface. The remote UE 2 communicates with the gNB 2 via the relay UE 3, and the remote UE 2 is connected to the relay UE 3 through a sidelink (sidelink).

For example, the relay UE 1, the relay UE 2, and the relay UE 3 may periodically broadcast discovery messages. The remote UE 1 may measure signal quality between the remote UE 1 and the relay UE 1, the relay UE 2, and the relay UE 3 based on the discovery messages broadcast by the relay UE 1, the relay UE 2, and the relay UE 3. When signal quality of any relay terminal meets a reporting condition in a measurement reporting configuration corresponding to the relay terminal, the remote UE 1 triggers measurement recording and reporting corresponding to the relay terminal, and reports a measurement result to the gNB 1. For example, when the signal quality of the relay UE 1 meets a reporting configuration in the corresponding measurement reporting configuration, the remote UE 1 records and reports the measurement result corresponding to the relay UE 1. The gNB 1 may indicate, based on the measurement result reported by the remote UE 1, a serving relay device of the remote UE 1 to switch to the relay UE 1, the relay UE 2, or the relay UE 3.

For example, the remote UE 2 may measure signal quality of a sidelink between the remote UE 2 and the relay UE 3, signal quality of a surrounding relay terminal, and signal quality of a surrounding cell. When there is no data transmission between the remote UE 2 and the relay UE 3, the remote UE 2 may measure the signal quality of the sidelink between the remote UE 2 and the relay UE 3 based on the discovery message broadcast by the relay UE 3, and perform measurement reporting when the signal quality of the sidelink between the remote UE 2 and the relay UE 3 meets the reporting condition.

It should be noted that the communication scenario shown in FIG. 14 is merely an example, and does not constitute a limitation on an application scenario to which embodiments of this application are applicable. It should be understood that the relay terminal used in embodiments of this application is merely for description, and does not mean that the solutions in embodiments of this application are applied to only a U2N relay scenario. In embodiments of this application, the relay terminal may usually refer to any node or device having a relay function. The communication method provided in embodiments of this application may be applied to various communication systems including relay devices, for example, an NR system, an LTE system, an LTE-A system, a worldwide interoperability for microwave access (worldwide interoperability for microwave access, WiMAX) system, or a wireless local area network (wireless local area networks, WLAN). For example, the communication method provided in embodiments of this application may be applied to a scenario in which a measurement signal changes abruptly, for example, a scenario in which a relay device suddenly stops sending measurement information or suddenly sends the measurement information.

FIG. 15A is a schematic flowchart of a communication method according to an embodiment of this application. The communication method may be applied to the scenario shown in FIG. 14. As shown in FIG. 15A, the communication method includes but is not limited to the following steps.

1501: A second terminal device sends a first broadcast message. Correspondingly, a first terminal device receives the first broadcast message.

For example, the first broadcast message may be a discovery message broadcast by the second terminal device. For example, the first broadcast message indicates that the second terminal device can provide a relay service. When providing the relay service, the second terminal device may periodically broadcast the discovery message, to indicate that the second terminal device can provide the relay service.

For example, after receiving the first broadcast message, the first terminal device may measure signal quality of the first broadcast message. For example, after receiving the first broadcast message, a physical layer of the first terminal device measures signal strength of the first broadcast message to obtain an L1 measurement result, and delivers the L1 measurement result to an RRC layer. The RRC layer performs L3 filtering on the L1 measurement result, to obtain signal quality SD-RSRP of the first broadcast message. For example, when the first terminal device is in an RRC connected state, the first terminal device may perform corresponding measurement recording and measurement reporting based on the SD-RSRP. Alternatively, when the first terminal device is in an RRC idle state or an inactive state, the first terminal device may select and reselect a relay device based on the SD-RSRP.

1502: If the first terminal device does not receive a second broadcast message from the second terminal device within first duration after the first terminal device receives the first broadcast message, the first terminal device determines that the second terminal device is not a relay device of the first terminal device.

For example, the second broadcast message may be a discovery message broadcast by the second terminal device. For example, the second terminal device may periodically send a discovery message, and the discovery message indicates that the second terminal device provides the relay service. The discovery message may include the first broadcast message and the second broadcast message, that is, the first broadcast message and the second broadcast message are discovery messages sent by the second terminal device at different moments.

If the first terminal device does not receive the second broadcast message from the second terminal device within the first duration after receiving the first broadcast message, it indicates that the second terminal device is not suitable to provide the relay service for the first terminal device. Therefore, the first terminal device determines that the second terminal device is not the relay device of the first terminal device, that is, the first terminal device does not use the second terminal device as the relay device of the first terminal device.

For example, when a sending condition of the discovery message is not met, the second terminal device stops sending the discovery message. For example, when signal quality between the second terminal device and a second network device does not meet a threshold condition, the second terminal device stops broadcasting the discovery message. For example, the signal quality between the second terminal device and the second network device may be Uu-RSRP of the second terminal device. When the Uu-RSRP of the second terminal device is less than a minimum threshold or greater than a maximum threshold, the second terminal device does not provide the relay service. Therefore, the second terminal device stops sending the discovery message. If the first terminal device does not receive the second broadcast message from the second terminal device within the first duration after receiving the first broadcast message, the first terminal device determines that the second terminal device stops sending the discovery message. Therefore, the first terminal device determines that the second terminal device is not the relay device of the first terminal device.

For example, the determining that the second terminal device is not a relay device of the first terminal device in step 1502 may include the following several cases.

Case 1: The second terminal device is not the relay device of the first terminal device at a current moment.

When the second terminal device is not the relay device of the first terminal device at the current moment, that the first terminal device determines that the second terminal device is not the relay device of the first terminal device may be understood as that the first terminal device determines not to use the second terminal device as the relay device of the first terminal device after the current moment, in other words, not to use the second terminal device as a candidate relay device.

Case 2: The second terminal device is the relay device of the first terminal device at a current moment.

When the second terminal device is the relay device of the first terminal device at the current moment, that the first terminal device determines that the second terminal device is not a relay device of the first terminal device may be understood as that the first terminal device determines that the second terminal device is no longer the relay device of the first terminal device after the current moment, that is, the first terminal device does not continue using the second terminal device as the relay device of the first terminal device after the current moment. In this case, there is a unicast connection between the first terminal device and the second terminal device, and the second terminal device provides the relay service for the first terminal device based on the unicast connection. After determining that the second terminal device is not the relay device of the first terminal device, the first terminal device may release the unicast connection between the first terminal device and the second terminal device, and hand over the relay device of the first terminal device to another terminal device, so that the second terminal device no longer provides the relay service for the first terminal device. For example, when the first terminal device is in an RRC connected state, after determining that the second terminal device is not the relay device of the first terminal device, the first terminal device reports a measurement result to a first network device, so that the relay device of the first terminal device switches to another terminal device based on an indication of the first network device. In this way, the second terminal device is no longer the relay device of the first terminal device. When the first terminal device is in an RRC idle state or an RRC inactive state, after determining that the second terminal device is not the relay device of the first terminal device, the first terminal device determines to reselect the relay device, to hand over the relay device of the first terminal device to another terminal device, so that the second terminal device is no longer the relay device of the first terminal device.

In this embodiment of this application, the first broadcast message and the second broadcast message may be discovery messages sent by the first terminal device at different moments, and the discovery message indicates that the second terminal device provides the relay service. When providing the relay service, the second terminal device usually periodically broadcasts the discovery message. When the second terminal device does not provide the relay service, the second terminal device stops sending the discovery message. Therefore, if the first terminal device does not receive the second broadcast message within the first duration after receiving the first broadcast message, the first terminal device may determine that the second terminal device is not the relay device of the first terminal device, so that the first terminal device can determine an inappropriate terminal device, and can more accurately determine whether the second terminal device is suitable to serve as the relay device of the first terminal device. It may be understood that, if the first terminal device receives the second broadcast message within the first duration after receiving the first broadcast message, the first terminal device may determine, by measuring signal quality of the first broadcast message and the second broadcast message, whether the second terminal device is suitable to serve as the relay device of the first terminal device.

In some embodiments, the first terminal device may broadcast a discovery message. Step 1501 may be replaced with the following: The first terminal device sends a first broadcast message, where the first broadcast message indicates that the first terminal device requests a relay service. Step 1502 may be replaced with the following: If a reply message is not received from the second terminal device within second duration after the first broadcast message is sent, it is determined that the second terminal device is not a relay device of the first terminal device. For example, the first broadcast message is a solicitation message sent by the first terminal device. When needing the relay service, the first terminal device may periodically send a solicitation message. The solicitation message indicates that the first terminal device needs the relay service. After receiving the solicitation message, the second terminal device sends the reply message to the first terminal device when the second terminal device can provide the relay service. If the first terminal device does not receive the reply message from the second terminal device within the second duration after sending the discovery message, it indicates that the second terminal device is not suitable to provide the relay service for the first terminal device. Therefore, the first terminal device determines that the second terminal device is not the relay device of the first terminal device.

For example, for the first duration, the following several implementations are provided in this embodiment of this application.

Implementation 1: The first duration is determined by the first network device.

For example, before step 1502, the communication method shown in FIG. 15A may further include the following step:
The first terminal device receives third indication information of the first network device, where the third indication information indicates the first duration.

For example, the first network device is a network device that connects the first terminal device to a network. The first duration is configured by the first network device. The first network device may determine the first duration based on a network implementation and an actual situation, and indicate the first duration by using the third indication information. For example, the first network device may determine the first duration based on the actual situation, and indicate, by using the third indication information, that the first terminal device does not receive, within the first duration, the discovery message sent by the second terminal device. In this case, it is determined that the second terminal device is not the relay device of the second terminal device. After receiving the third indication information, the first terminal device determines the first duration based on the third indication information. For example, the first duration is greater than a periodicity in which the second terminal device broadcasts the discovery message. In an optional manner, a periodicity in which the relay device broadcasts the discovery message is indicated to the first network device at an application layer of the network, for example, a discovery layer. Alternatively, the first network device may determine the first duration based on the indication of the network.

Implementation 2: The first duration may be determined by the first terminal device. The first terminal device determines the first duration based on a message received from the second terminal device in the past. Before step 1502, the communication method shown in FIG. 15A may further include the following step:
The first terminal device receives a third broadcast message sent by the second terminal device, and determines the first duration based on a time interval between receiving of the first broadcast message and receiving of the third broadcast message.

For example, the third broadcast message is a discovery message broadcast by the second terminal device. The first broadcast message and the third broadcast message are discovery messages received at different moments. The first terminal device may determine the first duration based on a time interval of a received discovery message sent by the second terminal device, that is, the first terminal device may determine the first duration based on the time interval between receiving of the first broadcast message and receiving of the third broadcast message. For example, the first broadcast message and the second broadcast message may be two discovery messages consecutively sent by the second terminal device. For example, the first duration may be greater than the time interval.

Implementation 3: The first duration is determined by the second terminal device. Before step 1502, the communication method shown in FIG. 15A may further include the following step:
The first terminal device receives fourth indication information of the second terminal device, where the fourth indication information indicates the first duration.

For example, when the sending condition of the discovery message is met, the second terminal device may periodically send the discovery message. In some implementations, the second terminal device may determine the first duration based on a periodicity in which the second terminal device sends the discovery message, and indicate the first duration to the first terminal device by using the fourth indication information. After receiving the fourth indication information, the first terminal device determines the first duration based on the fourth indication information. In some other implementations, the fourth indication information may include information about the periodicity in which the second terminal sends the discovery message. After receiving the fourth indication information, the first terminal device determines the periodicity in which the second terminal device sends the discovery message, and determines the first duration based on the periodicity in which the second terminal device sends the discovery message. For example, the first duration is greater than the periodicity in which the second terminal device sends the discovery message.

In this embodiment of this application, the first duration may be determined by any one of the first network device, the first terminal device, and the second terminal device. The first duration is greater than the periodicity in which the second terminal device sends the discovery message. For example, the first duration may be two periodicities in which the second terminal device sends the discovery message, to avoid a case in which the first terminal device does not receive the second broadcast message sent by the second terminal device on time due to a network delay. This can improve a fault tolerance rate.

In a possible implementation, before the determining that the second terminal device is not a relay device of the first terminal device in step 1502, the communication method further includes the following step:
When receiving the first broadcast message, the first terminal device starts a first timer corresponding to the second terminal device. Running duration of the first timer is equal to the first duration. When the first timer expires, the first terminal device determines that the second broadcast message is not received within the first duration.

For example, the first timer is a timer configured by the first terminal device for the second terminal device, and is used to enable the first terminal device to monitor, within running time of the first timer, the discovery message sent by the second terminal device. For example, the first broadcast message includes a first identifier of the second terminal device, and the first identifier identifies the second terminal device. For example, after receiving the first broadcast message, the first terminal device determines, based on the first identifier carried in the first broadcast message, that the first broadcast message is from the second terminal device. For example, the first identifier is associated with the first timer. After receiving the first broadcast message, the first terminal device starts the first timer, and monitors, within the running time of the first timer, the second broadcast message sent by the second terminal device. The second broadcast message includes the first identifier. For example, the first identifier may be a source L2 ID, and the source L2 ID is determined by the second terminal device. A source L2 ID in the first broadcast message is the same as that in the second broadcast message.

When receiving the second broadcast message, the first terminal device resets the first timer. When the first timer expires, the first terminal device does not receive the second broadcast message within the running duration of the first timer, that is, the first terminal device determines that the second broadcast message is not received within the first duration.

It should be understood that, when the first timer is already started when the first terminal device receives the first broadcast message, the starting a first timer may be understood as resetting the first timer.

For example, the first terminal device may receive discovery messages broadcast by a plurality of terminal devices, and configure a plurality of timers for the plurality of terminal devices, to monitor, within running time of a timer corresponding to a terminal device, the discovery message sent by the terminal device. For example, the first terminal device may receive a fourth broadcast message sent by a third terminal device, where the fourth broadcast message includes a second identifier, and the second identifier identifies the third terminal device. After receiving the fourth broadcast message, the first terminal device starts a second timer corresponding to the second identifier, to detect, within running time of the second timer, a fifth broadcast message sent by the third terminal device. For example, the fourth broadcast message and the fifth broadcast message are discovery messages sent by the third terminal device at different moments.

In this embodiment of this application, the first terminal device may maintain one timer for each terminal device, and may effectively detect the broadcast messages of the plurality of terminal devices, to determine whether the plurality of terminal devices are suitable to serve as relay devices of the first terminal device.

In a possible implementation, the first timer is controlled by a protocol layer of the first terminal device, and the protocol layer includes any one of a radio resource control RRC layer, a physical layer, a media access control MAC layer, and a discovery protocol layer.

For example, the first timer is controlled by the protocol layer of the first terminal device. For example, the protocol layer may start or reset the first timer, or set the running duration of the first timer. The protocol layer includes any one of the radio resource control RRC layer, the physical layer, the media access control MAC layer, and the discovery protocol layer, that is, the first timer may be controlled by any one of the RRC layer, the physical layer, the media access control MAC layer, and the discovery protocol layer. For example, when the first timer is controlled by the RRC layer of the first terminal device, the physical layer of the first terminal device receives the first broadcast message, performs L1 measurement, and delivers an L1 measurement result to the RRC layer. After receiving the L1 measurement result sent by the physical layer, the RRC layer starts or resets the first timer. When the first timer is controlled by the physical layer or the MAC layer, after the first terminal device receives the first broadcast message, the physical layer of the first terminal device indicates the MAC layer to start or reset the first timer. When the first timer expires, the physical layer or the MAC layer indicates that the RRC layer does not receive the second broadcast message within the first duration after the first broadcast message is received.

For example, after receiving the first broadcast message, an AS layer of the first terminal device may deliver related content of the first broadcast message to the discovery (discovery) protocol layer. Therefore, the first timer may alternatively be controlled by the discovery protocol layer. When the discovery protocol layer receives the related content of the first broadcast message, the discovery protocol layer starts or resets the first timer. When the discovery protocol layer detects that the first timer expires, the discovery protocol layer indicates that the RRC layer does not receive the second broadcast message within the first duration after the first broadcast message is received.

For example, as shown in FIG. 16, it is assumed that at a moment T0, the second terminal device meets the sending condition of the discovery message, and periodically broadcasts the discovery message to surroundings. For example, when the signal quality between the second terminal device and the second network device meets the threshold condition, the second terminal device periodically broadcasts the discovery message. For example, the signal quality between the second terminal device and the second network device may be Uu-RSRP. At moments T0, T 1, T2, and T3, the second terminal device broadcasts discovery messages (as shown by bold-line arrows in FIG. 16).

At the moments T0, T1, T2, and T3, the first terminal device receives and measures the discovery messages broadcast by the second terminal device. For example, the physical layer of the first terminal device performs L1 measurement on the discovery message to obtain an L1 measurement result, and delivers the L1 measurement result to the RRC layer. After receiving the L1 measurement result, the RRC layer starts or resets the first timer. Alternatively, when receiving the discovery message, the physical layer sends indication information to the RRC layer, to indicate, to the RRC layer, that the discovery message has been received.

At a moment T4, the second terminal device no longer meets the sending condition of the discovery message. Therefore, the second terminal device stops sending the discovery message. At a moment T5, the first terminal device detects that the first timer expires, but the discovery message sent by the second terminal device is not received. The first terminal device may determine that the second terminal device has stopped sending the discovery message. Therefore, the first terminal device determines that the second terminal device is not a relay device of the first terminal device.

In a possible implementation, when the second terminal device is not the relay device of the first terminal device at the current moment, the communication method shown in FIG. 15A may further include step 1503.

1503: The first terminal device deletes measurement information corresponding to the second terminal device.

For example, the measurement information corresponding to the second terminal device may include measurement identification information of the second terminal device. The measurement identification information is associated with a measurement reporting configuration corresponding to the second terminal device, and may be further associated with one or more of serving cell information of the second terminal device, ID information of the second terminal device, and signal quality of a sidelink of the second terminal device. After the first terminal device determines that the second terminal device is not the relay device of the first terminal device, the first terminal device deletes the measurement information corresponding to the second terminal device. To be specific, a measurement result reported by the first terminal device when the first terminal device subsequently triggers measurement reporting does not include the measurement information of the second terminal device.

For example, the measurement information may include a measurement entry, and the measurement entry is recorded in a measurement variable of the first terminal device. The measurement entry recorded in the measurement variable may be measurement ID information of the first terminal device, and the measurement variable may include measurement entries corresponding to the plurality of terminal devices. When determining that the second terminal device is not the relay device of the first terminal device, the first terminal device deletes a measurement entry corresponding to the second terminal device from the measurement variable.

For example, when the sending condition of the discovery message is met, the second terminal device periodically broadcasts the discovery message. The first terminal device receives and measures the discovery message sent by the second terminal, to obtain SD-RSRP corresponding to the second terminal device. When the SD-RSRP of the first terminal device meets an entry condition of a measurement reporting event, the first terminal device uses the second terminal device as a measurement object, and records the second terminal device in the measurement variable of the first terminal device, to form the measurement entry corresponding to the second terminal device. The first terminal device may further perform measurement reporting based on a measurement reporting configuration corresponding to the measurement reporting event.

For example, as shown in FIG. 16, it is assumed that at the moment T1, the first terminal device detects that the SD-RSRP of the second terminal device meets an entry condition of a measurement reporting event Y To be specific, within a first time segment, signal quality of a serving cell of the first terminal device remains less than a threshold Y1, and the SD-RSRP of the second terminal device remains greater than a threshold Y2. Duration of the first time segment is greater than or equal to TimeToTrigger duration. The first terminal device uses the second terminal device as a measurement object, records the second terminal device in the measurement variable of the first terminal device, and performs measurement reporting based on a measurement reporting configuration corresponding to the measurement reporting event Y At the moment T4, the second terminal device does not meet the sending condition of the discovery message, for example, Uu-RSRP of the second terminal device does not meet the threshold condition. In this case, the second terminal device stops sending the discovery message. At the moment T5, the first terminal device does not receive the discovery message sent by the second terminal device. In this case, the first terminal device determines that the second terminal device has stopped sending the discovery message. The second terminal device stops sending the discovery message, indicating that the second terminal device is no longer suitable to provide the relay service. Therefore, the first terminal device may delete the second terminal device from the measurement variables, that is, delete the measurement entry corresponding to the second terminal device.

It may be understood that the measurement reporting event Y is merely an example. When the signal quality of the sidelink between the first terminal device and the second terminal device meets the entry condition of the measurement reporting event, the first terminal device may record the second terminal device as a measurement object in the measurement variable of the first terminal device. The measurement reporting event may be the measurement reporting event Y, or may be another measurement reporting event. For example, the entry condition of the measurement reporting event is: A signal quality difference between signal quality of a surrounding relay device on a sidelink and signal quality of a serving cell is greater than a fourth threshold. The measurement reporting event is not limited in this application.

It may be understood that, at the moment T5, if the first terminal device does not receive the discovery message sent by the second terminal device, the first terminal device may determine that the SD-RSRP of the second terminal device meets an exit condition of the measurement reporting event, or determine that the SD-RSRP of the second terminal device is 0. If an exit condition of the measurement reporting event Y is met, the first terminal device deletes the second terminal device from the measurement variable, that is, deletes the measurement entry corresponding to the second terminal device.

For specific descriptions of the measurement reporting event Y, refer to the foregoing related descriptions. Details are not described herein again.

In this embodiment of this application, after it is determined that the second terminal device is not the relay device of the first terminal device, the measurement information corresponding to the second terminal device is deleted from the measurement variable, to ensure that the measurement reporting includes a measurement result of an appropriate terminal device. In addition, memory space occupied by the measurement result is saved, and resources needed for reporting the measurement result are reduced.

FIG. 15B is a schematic interaction diagram of another communication method according to an embodiment of this application. As shown in FIG. 15B, the method includes the following steps.

1501: A second terminal device sends a first broadcast message. Correspondingly, a first terminal device receives the first broadcast message.

1502: If the first terminal device does not receive a second broadcast message from the second terminal device within first duration after the first terminal device receives the first broadcast message, the first terminal device determines that the second terminal device is not a relay device of the first terminal device.

For specific implementations of step 1501 and step 1502, refer to FIG. 15A. Details are not described herein again.

In a possible implementation, there is a unicast connection between the first terminal device and the second terminal device, and before determining that the second terminal device is not the relay device of the first terminal device, the first terminal device may perform the following operations: The first terminal device sends first indication information to the second terminal device through the unicast connection. The first indication information is used to trigger the second terminal device to send a first message, the first message is used to measure first signal quality, and the first signal quality is signal quality between the first terminal device and the second terminal device. The first terminal device receives the first message. The first terminal device determines the first signal quality based on the first message. That the first terminal device determines that the second terminal device is not a relay device of the first terminal device may be as follows: When the first signal quality is less than a first threshold, the first terminal device determines that the second terminal device is not the relay device of the first terminal device.

For example, the first message may be any message sent by the second terminal device to the first terminal device. For example, there is the unicast connection between the first terminal device and the second terminal device, and the second terminal device provides a relay service for the first terminal device. When there is no data transmission on the unicast connection between the first terminal device and the second terminal device, the first terminal device may measure the signal quality between the first terminal device and the second terminal device based on a discovery message broadcast by the second terminal device. For example, if the first terminal device does not receive, within the first duration after receiving the first broadcast message, the second broadcast message sent by the second terminal device, the first terminal device may determine that the second terminal device stops sending the discovery message. The first broadcast message and the second broadcast message are discovery messages broadcast by the second terminal device at different moments. After the first terminal device determines that the second terminal device stops sending the discovery message, the first terminal device may send first indication information to the second terminal device, where the first indication information is used to trigger the second terminal device to send the first message, so that the first terminal device may measure the first signal quality based on the first message. The first signal quality may be SL-RSRP. The first terminal device receives and measures the first message to obtain the first signal quality. When the first signal quality is less than the first threshold, the second terminal device is not suitable to provide the relay service for the first terminal device. Therefore, the first terminal device determines that the second terminal device is not the relay device of the first terminal device. For example, the first threshold may be a threshold Xl in a measurement reporting event X.

It may be understood that when the first signal quality is greater than or equal to the first threshold, it indicates that signal quality of a sidelink between the first terminal device and the second terminal device meets a requirement of the second terminal device to provide the relay service for the first terminal device, the second terminal device can continue providing the relay service for the first terminal device, and the first terminal device can continue using the second terminal device as the relay device of the first terminal device.

In this embodiment of this application, when the second terminal device provides the relay device for the first terminal device, if the first terminal device does not receive, within the first duration after receiving the first broadcast message, the second broadcast message sent by the second terminal device, the first indication information may be used to trigger data transmission between the first terminal device and the second terminal device, to detect the first signal quality between the first terminal device and the second terminal device. When the first signal quality is less than the first threshold, it is determined that the second terminal device is not the relay device of the first terminal device. When the first signal quality is not less than the first threshold, it is determined that the second terminal device may continue serving as the relay device of the first terminal device, to avoid unnecessary switch.

1504: The first terminal device reports a measurement result to a first network device. Correspondingly, the first network device receives the measurement result.

For example, the first network device is a network device that connects the first terminal device to a network. The measurement result may include a measurement result of a surrounding optional cell of the first terminal device and a measurement result of a surrounding optional relay terminal. It may be understood that the measurement result of the surrounding optional cell of the first terminal device or the measurement result of the surrounding optional relay terminal meets an entry condition of a corresponding measurement reporting event. The measurement result of the surrounding optional cell includes an ID of the surrounding optional cell and signal quality of the surrounding optional cell. The measurement result of the surrounding optional relay terminal may include an ID of the surrounding optional relay terminal, an ID of a serving cell of the surrounding optional relay terminal, and signal quality of the surrounding optional relay terminal. When the first terminal device is in an RRC connected state, after determining that the second terminal device is no longer suitable to serve as a relay device of the first terminal device, the first terminal device may trigger measurement reporting, and report a measurement result to the first network device. After receiving the measurement result, the first network device may indicate, based on the measurement result, the first terminal device to switch from the second terminal device to one of the surrounding optional cell and the surrounding optional relay terminal.

For example, there is a unicast connection between the first terminal device and the second terminal device, and the second terminal device provides a relay service for the first terminal device. The first terminal device obtains the relay service via the second terminal device, to access the first network device. The first terminal device may report the measurement result to the first network device via the second terminal device.

For example, when the first terminal device is in an RRC connected state, the first terminal device detects signal quality of a sidelink between the first terminal device and the second terminal device, signal quality of a surrounding cell, and signal quality of a surrounding relay terminal, to perform measurement reporting. When there is no data transmission between the first terminal device and the second terminal device, that is, no unicast connection is used for data transmission between the first terminal device and the second terminal device, the first terminal device may detect the signal quality of the sidelink between the first terminal device and the second terminal device based on a discovery message broadcast by the second terminal device, that is, the first terminal device measures SD-RSRP of the second terminal device.

For example, when a sending condition of the discovery message is met, the second terminal device may periodically broadcast the discovery message. If the first terminal device does not receive, within the first duration after receiving the first broadcast message sent by the second terminal device, the second broadcast message sent by the second terminal device, the first terminal device determines that the second terminal device stops sending the discovery message. The first broadcast message and the second broadcast message are discovery messages sent by the second terminal device at different moments. When determining that the second terminal device stops sending the discovery message, the first terminal device determines that the second terminal device is no longer suitable to provide the relay service for the first terminal device. Therefore, the first terminal device may trigger the measurement reporting, and report the measurement result to the first network device. It may be understood that the measurement result should meet the entry condition of the corresponding measurement reporting event. After determining not to use the second terminal device as the relay device of the first terminal device, the first terminal device reports the measurement result to the first network device, so that the first network device may indicate, based on the measurement result, the relay device of the first terminal device to switch from the second terminal device to the surrounding optional cell or the surrounding optional relay terminal.

For example, when a measurement variable includes at least one measurement object, the first terminal device triggers the measurement reporting, and the reported measurement result includes a measurement result corresponding to the at least one measurement object. When there is no measurement object in the measurement variable, the first terminal device may detect signal quality of a surrounding cell and signal quality of a sidelink between the first terminal device and a surrounding relay terminal. For example, when the signal quality of the surrounding cell meets a measurement reporting condition in a measurement reporting configuration corresponding to the surrounding cell, the surrounding cell is added to the measurement variable of the first terminal device, and a measurement result is reported. The measurement result includes a measurement result corresponding to the surrounding cell.

In a possible implementation, the first terminal device may determine, based on an indication of the first network device, that the second terminal device is not the relay device of the first terminal device. For example, after determining that the second terminal device stops sending the discovery message, the first terminal device may trigger the measurement reporting, to report the measurement result to the first network device. The first network device determines, based on the measurement result, whether to continue to use the second terminal device as the relay device of the first terminal device. When the first network device determines that the second terminal device is no longer used as the relay device of the first terminal device, the first network device sends fifth indication information to the first terminal device. The fifth indication information indicates that the second terminal device is not used as the relay device of the first terminal device. After receiving the fifth indication information, the first terminal device determines that the second terminal device is no longer suitable to serve as the relay device of the first terminal device. For example, the first terminal device may further perform indirect-to-direct communication switch or indirect-to-indirect communication switch based on the fifth indication information. To be specific, the first terminal device may switch from the second terminal device to the surrounding optional cell or to the surrounding optional relay terminal based on the fifth indication information.

For example, that the first terminal device reports the measurement result to the first network device may be: The first terminal device reports the measurement result to the first network device when determining that the second terminal device stops sending the discovery message and the signal quality of the surrounding optional cell meets the entry condition of the measurement reporting event. For example, when determining that the second terminal device stops sending the discovery message and the signal quality of the surrounding optional cell is greater than a threshold X1, the first terminal device reports the measurement result to the first network device.

For example, as shown in FIG. 16, it is assumed that before a moment T5, the first terminal device detects that signal quality of a sidelink of the second terminal device is greater than the threshold X1. An entry condition of a measurement reporting event X is not met, and the measurement reporting is not triggered. At the moment T5, the first terminal device does not receive the discovery message sent by the second terminal device. In this case, the first terminal device determines that the second terminal device stops sending the discovery message. In this case, if the first terminal device detects that signal quality of the surrounding optional cell is greater than a threshold X2, measurement reporting corresponding to the measurement reporting event X is triggered. For example, the first terminal device may record the second terminal device as a measurement object in the measurement variable of the first terminal device, and perform the measurement reporting based on a measurement reporting configuration of the measurement reporting event X.

It may be understood that when the first terminal device determines that the second terminal device stops sending the discovery message, the first terminal device may determine that the SD-RSRP of the second terminal device is 0, or the SD-RSRP of the second terminal device is less than the threshold X1, to meet a condition that signal quality of a sidelink between a remote terminal and a serving relay terminal is less than the threshold Xl in the measurement reporting event X. When the first terminal device detects that signal quality of the surrounding optional cell is greater than the threshold X2, the entry condition of the measurement reporting event X is met, and measurement reporting corresponding to the measurement reporting event X is triggered.

For specific descriptions of the measurement reporting event X, refer to the foregoing related descriptions. Details are not described herein again.

In this embodiment of this application, when the second terminal device has been the relay device of the first terminal device, after determining that the second terminal device is not the relay device of the first terminal device, the first terminal device triggers the measurement reporting, to report the measurement result to the first network device, so that the first network device can indicate, based on the measurement result, the first terminal device to switch to an appropriate cell or relay device.

FIG. 15C is a schematic interaction diagram of still another communication method according to an embodiment of this application. As shown in FIG. 15C, the method includes the following steps.

1501: A second terminal device sends a first broadcast message. Correspondingly, a first terminal device receives the first broadcast message.

1502: If the first terminal device does not receive a second broadcast message from the second terminal device within first duration after the first terminal device receives the first broadcast message, the first terminal device determines that the second terminal device is not a relay device of the first terminal device.

For specific implementations of step 1501 and step 1502, refer to FIG. 15A. Details are not described herein again.

1505: The first terminal device determines to reselect a relay device.

For example, when the first terminal device is in an RRC idle state or an RRC inactive state, after determining that the second terminal device is not a relay device of the first terminal device, the first terminal device determines to reselect a relay device. As shown in FIG. 16, it is assumed that before a moment T5, the first terminal device detects, based on a discovery message sent by the second terminal device, that SD-RSRP of the second terminal device is greater than a preset threshold, and at the moment T5, the first terminal device does not receive the discovery message of the second terminal device, the first terminal device determines that the second terminal device stops sending the discovery message. Therefore, the second terminal device is no longer suitable to serve as the relay device of the first terminal device, and the first terminal device may reselect the relay device.

It should be understood that, if the first terminal device does not receive, at the moment T5, the discovery message sent by the second terminal device, the first terminal device may determine that SD-RSRP of the second terminal device is 0, and a trigger condition for reselecting the relay device is met.

In this embodiment of this application, when the first terminal device is in the RRC idle state or the RRC inactive state, after determining that the second terminal device is not the relay device of the first terminal device, the first terminal device may trigger the first terminal device to reselect the relay device, so that the first terminal device can switch to an appropriate relay device.

FIG. 17 is a schematic interaction diagram of still another communication method according to an embodiment of this application. As shown in FIG. 17, the communication method includes but is not limited to the following steps.

1701: A second terminal device sends a first broadcast message. Correspondingly, a first terminal device receives the first broadcast message.

It may be understood that for a specific implementation of step 1701, refer to the related descriptions of step 1501 in FIG. 15A. Details are not described herein again.

1702: When the first terminal device does not receive a second broadcast message within first duration after the first terminal device receives the first broadcast message, the first terminal device deletes measurement information corresponding to the second terminal device.

It may be understood that for a specific implementation of step 1702, refer to the related descriptions of step 1503 in FIG. 15A. Details are not described herein again.

In this embodiment of this application, if the first terminal device does not receive the second broadcast message within the first duration after receiving the first broadcast message, the first terminal device deletes the measurement information corresponding to the second terminal device, that is, the first terminal device may not perform the operation of determining that the second terminal device is not a relay device of the first terminal device in step 1502. For example, that the first terminal device deletes measurement information corresponding to the second terminal device may be: When there is no unicast connection between the first terminal device and the second terminal device, the first terminal device may delete the measurement information corresponding to the second terminal device from a measurement result. If the second broadcast message is not received within the first duration after the first broadcast message is received, it may be determined that the second terminal device is not suitable to be the relay device of the first terminal device. Therefore, the measurement information corresponding to the second terminal device may be deleted, so that the measurement result reported by the first terminal device does not include measurement information corresponding to an inappropriate terminal device, to ensure that the measurement result includes measurement information of an appropriate terminal device.

In some implementations, when there is a unicast connection between the first terminal device and the second terminal device, and the first terminal device is in an RRC connected state, step 1702 may be replaced with the following: If the first terminal device does not receive the second broadcast message within the first duration after receiving the first broadcast message, the first terminal device reports the measurement result to a first network device.

When there is the unicast connection between the first terminal device and the second terminal device, and the first terminal device is in the RRC connected state, the first terminal device may trigger measurement reporting, to report the measurement result to the first network device, so that the first network device can indicate, based on the measurement result, the first terminal device to perform switch of the relay device, and the first terminal device can switch to an appropriate cell or relay device.

In a possible implementation, there is a unicast connection between the first terminal device and the second terminal device, and before the reporting a measurement result to a first network device, the method further includes: The first terminal device sends first indication information to the second terminal device through the unicast connection. The first indication information is used to trigger the second terminal device to send a first message, the first message is used to measure first signal quality, and the first signal quality is signal quality between the first terminal device and the second terminal device. The first terminal device receives the first message. The first terminal device determines the first signal quality based on the first message.

In this embodiment of this application, when there is the unicast connection between the first terminal device and the second terminal device, no data transmission is performed through the unicast connection between the first terminal device and the second terminal device, and the first terminal device does not receive the second broadcast message within the first duration after receiving the first broadcast message, the first terminal device may trigger, by using the first indication information, the second terminal device to send the first message, so that data transmission is performed between the first terminal device and the second terminal device. In this way, the first terminal device can detect the first signal quality between the first terminal device and the second terminal device based on the first message, and can accurately determine whether the second terminal is suitable to continue providing a relay service for the first terminal device.

In a possible implementation, the reporting a measurement result to a first network device includes: When the first signal quality is less than a first threshold, the first terminal device reports the measurement result to the first network device.

In this embodiment of this application, when the first signal quality is less than the first threshold, the first terminal device determines that the second terminal device is no longer suitable to provide a relay service for the first terminal device, and the first terminal device can report to the first network device, so that the first terminal device can switch to an appropriate relay device based on an indication of the first network device. When the first signal quality is not less than the first threshold, the first terminal device determines that the second terminal device is suitable to continue providing the relay service for the first terminal device, and does not need to switch from the relay device, to avoid unnecessary switch.

In some implementations, when there is a unicast connection between the first terminal device and the second terminal device, and the first terminal device is in an RRC idle state or an RRC inactive state, step 1702 may be replaced with the following: If the first terminal device does not receive the second broadcast message within the first duration after receiving the first broadcast message, the first terminal device determines to reselect a relay device.

When there is the unicast connection between the first terminal device and the second terminal device, and the first terminal device is in the RRC idle state or the RRC inactive state, the first terminal device can determine to reselect the relay device, so that the relay device of the first terminal device switches to an appropriate relay device.

FIG. 18A is a schematic interaction diagram of still another communication method according to an embodiment of this application. As shown in FIG. 18A, the communication method includes but is not limited to the following steps.

1801: A second terminal device sends a first broadcast message. Correspondingly, a first terminal device receives the first broadcast message.

The first broadcast message includes first cell information of the second terminal device. For example, the first cell information may include serving cell information of the second terminal device, and the serving cell information may include identification information of the serving cell. For example, the identification information may be a physical cell identifier (physical cell identifier, PCI) or a cell identity (cell identity). The first broadcast message may be a discovery message broadcast by the second terminal device, and indicates that the second terminal device can provide a relay service. The first terminal device receives the first broadcast message sent by the second terminal device, and obtains the first cell information from the first broadcast message.

1802: The first terminal device determines, based on the first cell information, whether the serving cell of the second terminal device changes.

For example, the first cell information includes serving cell information of the second terminal device at a first moment, the first moment is a moment at which the second terminal device sends the first broadcast message, and the first moment may also be understood as a moment at which the first terminal device receives the first broadcast message.

For example, the first terminal device may determine, based on a message received from the second terminal device before the first moment, serving cell information of the second terminal device before the first moment. The first terminal device compares the serving cell information of the second terminal device at the first moment with the serving cell information before the first moment, to determine whether the serving cell of the second terminal device changes.

For example, before receiving the first broadcast message, the first terminal device further receives a third broadcast message from the second terminal device. The third broadcast message includes third cell information of the second terminal device. The third cell information includes identification information of a serving cell at a moment at which the second terminal device sends the third broadcast message. The first terminal device may compare the third cell information with the first cell information, and determine, based on a comparison result of the first cell information and the third cell information, whether the second terminal device changes. When the first cell information is different from the third cell information, the first terminal device determines that the serving cell of the second terminal device changes. For example, when a serving cell identifier in the first cell information is different from a serving cell identifier in the third cell information, the first terminal device determines that the serving cell of the second terminal device changes. When the first cell information is the same as the third cell information, the first terminal device determines that the serving cell of the second terminal device does not change.

In an implementation, the third broadcast message may be a discovery message broadcast by the second terminal device. After receiving the third broadcast message, the first terminal device may further measure signal quality between the first terminal device and the second terminal device based on the third broadcast message, that is, measure SD-RSRP of the second terminal device. When the SD-RSRP of the second terminal device meets an entry condition of a measurement reporting event Y, that is, the SD-RSRP is greater than a threshold Y2, the first terminal device records the second terminal device as a measurement object in a measurement variable, to form a measurement entry corresponding to the second terminal device. The measurement entry may include serving cell information at a moment at which the second terminal device sends the third broadcast message.

For example, after receiving the first broadcast message and obtaining the first cell information from the first broadcast message, the first terminal device may determine the serving cell information of the second terminal device before the first moment based on measurement information corresponding to the second terminal device. Then, the first terminal device compares the serving cell information in the first cell information with serving cell information associated with the measurement entry, to determine whether the serving cell of the second terminal device changes.

1803: The first terminal device sends a second message. Correspondingly, a first network device receives the second message.

When the serving cell of the second terminal device changes, the first terminal device sends the second message to the first network device. The second message includes the first cell information. For example, the second message may be used to indicate that the serving cell of the second terminal device changes. When determining that the serving cell of the second terminal device changes, the first terminal device sends the second message to the first network device. The second message includes the first cell information. After receiving the second message, the first network device may update the serving cell information of the second terminal device based on the first cell information.

In an implementation, the sending the second message to the first network device may be: sending the second message to the first network device when the measurement variable of the first terminal device includes the measurement entry corresponding to the second terminal device. The measurement entry is used to record a measurement result of the second terminal device. When the measurement variable of the first terminal device includes the measurement entry corresponding to the second terminal device, it indicates that the first terminal device had reported the measurement information corresponding to the second terminal device to the first network device before the first moment. The measurement information includes the serving cell information of the second terminal device before the first moment. Therefore, when determining that the serving cell of the second terminal device changes, the first terminal device sends the second message to the first network device, so that the first network device can update the serving cell information of the second terminal device in a timely manner.

Optionally, if the measurement variable of the first terminal device does not include the measurement entry corresponding to the second terminal device, the first terminal device may not send the second message.

In this embodiment of this application, when determining that the serving cell of the second terminal device changes, the first terminal device sends the second message to the first network device, so that the first network device can update the serving cell information of the second terminal device in a timely manner, to prevent the relay device of the first terminal device from failing in switching to the second terminal device because the first network device does not update the serving cell information of the second terminal device in a timely manner.

In a possible implementation, the second message may include a measurement result of the first terminal device, and the first cell information is included in the measurement information corresponding to the second terminal device. For example, when the first terminal device determines that the serving cell of the second terminal device changes, the first terminal device may trigger measurement reporting, to report the measurement result to the first network device. The measurement result includes the measurement information corresponding to the second terminal device, for example, a measurement result associated with the measurement entry corresponding to the second terminal device, and the measurement result corresponding to the second terminal device includes the first cell information. The first terminal device triggers the measurement reporting, to send serving cell information of the second terminal device after the change to the first network device, so that the first network device can update the serving cell information of the second terminal device in a timely manner.

In a possible implementation, before sending the second message to the first network device, the first terminal device may perform the following operation: The first terminal device determines, based on the first cell information, whether a current serving cell of the second terminal device is an allowed cell. That the first terminal device sends the second message to the first network device may be: When the current serving cell of the second terminal device is the allowed cell, the first terminal device sends the second message to the first network device.

For example, the allowed cell is a cell that can be accessed by the first terminal device. In other words, access to the cell is not forbidden. The first terminal device determines, based on the first cell information, whether the current serving cell of the second terminal device is an allowed cell. When the current serving cell of the second terminal device is the allowed cell, it indicates that the second terminal device can still support access of the first terminal device, and the first terminal device will send the second message to the first network device, so that the first network device updates the serving cell information of the second terminal device in a timely manner.

For example, the first terminal device may determine whether the current serving cell of the second terminal device belongs to an allowed cell list (allow-list). When the current serving cell of the second terminal device belongs to the allowed cell list, it is determined that the current serving cell of the second terminal device is the allowed cell. The allowed cell list may be configured by the first network device, preconfigured by the first terminal device, or configured by a network in which the first terminal device is located. This is not limited in this application.

In this embodiment of this application, before sending the second message to the first network device, the first terminal device first determines whether the current serving cell of the second terminal device is the allowed cell, to determine whether the second terminal device can provide the relay service for the first terminal device. When the current serving cell of the second terminal device is the allowed cell, the second terminal device can provide the relay service for the first terminal device. Therefore, the first terminal device sends the second message to the first network device, so that the first network device updates the serving cell information of the second terminal device in a timely manner. In addition, it is ensured that the first network device can make a proper decision, to avoid a case in which the second terminal device cannot provide the relay service for the first terminal device and the first network device determines to use the second terminal device as the relay device of the first terminal device.

FIG. 18B is a schematic interaction diagram of still another communication method according to an embodiment of this application. As shown in FIG. 18B, the communication method includes but is not limited to the following steps.

1801: A second terminal device sends a first broadcast message. Correspondingly, a first terminal device receives the first broadcast message.

The first broadcast message includes first cell information of the second terminal device.

1804: The first terminal device determines, based on the first cell information, whether a current serving cell of the second terminal device is a blocked cell.

1805: When the current serving cell of the second terminal device is the blocked cell, the first terminal device deletes measurement information corresponding to the second terminal device.

For example, the measurement information corresponding to the second terminal device includes a measurement entry corresponding to the second terminal. The blocked cell is determined by a first network device. When the current serving cell of the second terminal device is the blocked cell, it indicates that the second terminal device is not suitable to serve as a relay device of the first terminal device. Therefore, the first terminal device may trigger an exit condition of a measurement reporting event corresponding to the second terminal device, and delete the measurement entry corresponding to the second terminal device from a measurement variable. For example, when the measurement reporting event corresponding to the second terminal device has triggered measurement reporting, the measurement reporting corresponding to the measurement reporting event is stopped.

For example, the first network device may configure a blocked cell list (block-list) for the first terminal device. When the current serving cell of the second terminal device belongs to the blocked cell list, it is determined that the current serving cell of the second terminal device is the blocked cell. Therefore, the first terminal device deletes the measurement information corresponding to the second terminal device. Optionally, the blocked cell list (block-list) may alternatively be based on a preconfiguration of the first terminal device or a network configuration.

In this embodiment of this application, when the current serving cell of the second terminal device is the blocked cell, the second terminal device cannot provide the relay service for the first terminal device. Therefore, the first terminal device can delete the measurement information corresponding to the second terminal device from a measurement result of the first terminal device, to ensure that the reported measurement result includes measurement information of an appropriate terminal device. In addition, memory space occupied by the measurement result can be saved, and resources needed when the first terminal device reports the measurement result can be reduced.

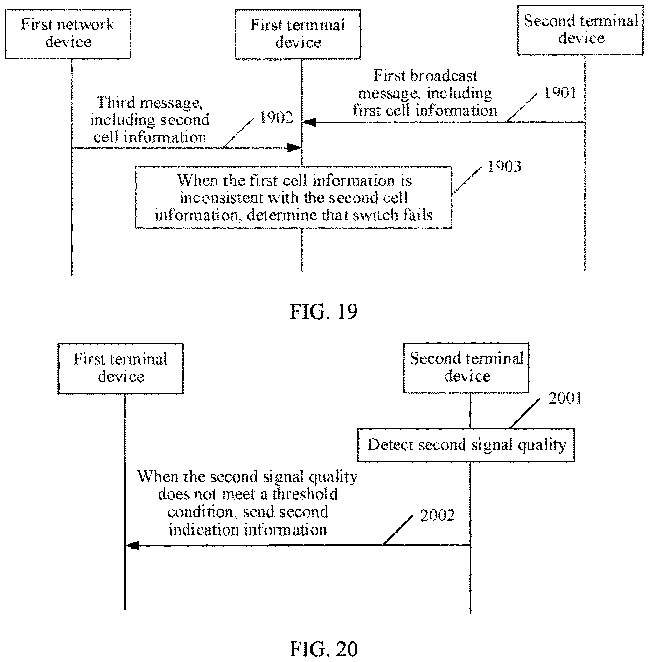

FIG. 19 is a schematic interaction diagram of still another communication method according to an embodiment of this application. As shown in FIG. 19, the communication method includes but is not limited to the following steps.

1901: A second terminal device sends a first broadcast message. Correspondingly, a first terminal device receives the first broadcast message. The first broadcast message includes first cell information of the second terminal device.

For a specific implementation of step 1901, refer to the specific descriptions of step 1801 shown in FIG. 18A. Details are not described herein again.

1902: A first network device sends a third message. Correspondingly, the first terminal device receives the third message, where the third message includes second cell information of the second terminal device, and the third message indicates to switch from a relay device of the first terminal device to the second terminal device.

For example, the third message may be a handover command (for example, an HO command message) sent by the first network device, and the third message may be generated by the first network device based on a measurement result reported by the first terminal device. For example, the first terminal device may measure signal quality between the first terminal device and the second terminal device. When the signal quality between the first terminal device and the second terminal device meets an entry condition of a measurement reporting event corresponding to the second terminal device, measurement reporting is triggered, to report a measurement result to the first network device. The measurement result may include measurement information corresponding to the second terminal device. For example, the measurement information may include ID information of a serving cell of the second terminal device, ID information of the second terminal device, and the signal quality between the first terminal device and the second terminal device. After receiving the measurement result, the first network device determines, based on the measurement result, to use the second terminal device as the relay device of the first terminal device, and sends a third message to the first terminal device. The third message indicates to switch from the relay device of the first terminal device to the second terminal device. The third message includes the second cell information of the second terminal device, and the first terminal device can access the serving cell of the second terminal device via the second terminal device.

It may be understood that the first terminal device may perform step 1901 before step 1902, simultaneously perform step 1902 and step 1902, or perform step 1902 before step 1901. This is not limited in this application.

1903: When the first cell information is inconsistent with the second cell information, the first terminal device determines that the switch fails.

For example, when the first cell information is inconsistent with the second cell information, it indicates that the second terminal device has performed cell change. Therefore, the first terminal device determines that the switch fails, and does not perform a subsequent switch action.

In an implementation, after the first terminal device determines that the switch fails, the method further includes at least one of the following:
the first terminal device records the switch failure;
the first terminal device breaks a connection to the second terminal device; and
the first terminal device performs radio resource control RRC connection reestablishment.

For example, when determining that the switch fails, the first terminal device may perform switch failure processing, for example, recording the switch failure, breaking a unicast connection to the second terminal device, and performing RRC connection reestablishment. For example, the first terminal device may perform a measurement record of the switch failure, and send the measurement record to the first network device when receiving a request from the first network device.

In an implementation, when the first cell information is inconsistent with the second cell information, if the first terminal device receives a unicast connection establishment request message sent by the second terminal device, the first terminal device may return a unicast connection reject message to the second terminal device. The unicast connection reject message may include a reject cause. The reject cause may include any one of security policy not aligned (security policy not aligned), a protocol error (protocol error), or an unspecified (unspecified) cause. It should be understood that the reject cause is merely an example. The reject cause in this embodiment of this application may further include another cause. For example, the reject cause may further include a new cause defined based on an application scenario. Therefore, the several reject causes shown above should not be understood as a limitation on implementation of this application.

In this embodiment of this application, when receiving the handover command sent by the first network device and discovery information of the second terminal device, the first terminal device compares whether cell information of the second terminal device that is carried in the handover command is the same as cell information of the second terminal device that is carried in the discovery information. When the first cell information is inconsistent with the second cell information, the first terminal device determines that the switch fails, to avoid a waste of resources in a subsequent switch action.

FIG. 20 is a schematic interaction diagram of still another communication method according to an embodiment of this application. As shown in FIG. 20, the communication method includes but is not limited to the following steps.

2001: A second terminal device measures second signal quality. The second signal quality is signal quality between the second terminal device and a second network device.

For example, the second network device is a network device that connects the second terminal device to a network, and the second terminal device may communicate with the second network device through a Uu interface. The second signal quality may be Uu-RSRP, that is, signal quality of the second terminal device on a direct link of the Uu interface. The signal quality on the Uu interface is obtained by measuring a cell beam, for example, an SSB beam.

For example, when data or a reference signal is communicated through a direct link between the second terminal device and the second network device, the second terminal device may measure the second signal quality based on the communicated data or reference signal. When no data or reference signal is communicated through the direct link between the second terminal device and the second network device, the second terminal device may measure the second signal quality based on a broadcast message sent by the second network device.

For example, the second terminal device may determine, based on the second signal quality, whether to provide a relay service. When the second signal quality meets a threshold condition, the second terminal device may provide the relay service, and the second terminal device may periodically broadcast a discovery message. The discovery message indicates that the terminal device can provide the relay service. For example, the discovery message may carry a source L2 ID of the second terminal device. In some implementations, the second terminal device may change the source L2 ID in the discovery message after performing cell change.

2002: The second terminal device sends second indication information. Correspondingly, the first terminal device receives the second indication information.

When the second signal quality does not meet the threshold condition, the second terminal device sends the second indication information. The second indication information indicates that the second terminal device does not provide the relay service. For example, when the second signal quality does not meet the threshold condition, the second terminal device determines not to provide the relay service, and sends the second indication information. After receiving the second indication information, the first terminal device determines that the second terminal device does not provide the relay service. Therefore, it may be determined that the second terminal device is not suitable to serve as a relay device of the first terminal device. The second signal quality is the signal quality between the second terminal device and the second network device, and the second network device is the network device that connects the second terminal device to the network. For example, when the second signal quality is greater than a second threshold, or the second signal quality is greater than a third threshold, the second terminal device sends the second indication information. The second threshold and the third threshold may be configured by the second network device. For example, the second threshold is a minimum threshold of the signal quality of the second terminal device on the Uu interface when the second terminal device can send the discovery message, and the third threshold is a maximum threshold of the signal quality of the second terminal device on the Uu interface when the second terminal device can send the discovery message.

For example, as shown in FIG. 16, it is assumed that at a moment T0, the second terminal device meets the sending condition of the discovery message, and periodically broadcasts a discovery message to surroundings. For example, when the signal quality between the second terminal device and the second network device meets the threshold condition, the second terminal device periodically broadcasts the discovery message. For example, the signal quality between the second terminal device and the second network device may be Uu-RSRP. At moments T0, T 1, T2, and T3, the second terminal device broadcasts discovery messages (as shown by bold-line arrows in FIG. 16). At the moment T4, the second terminal device no longer meets the sending condition of the discovery message, and the second terminal device may send the foregoing second indication information (as shown by a thin-line arrow in FIG. 16). At the moment T4, the first terminal device receives the second indication information sent by the second terminal device, and may determine that the second terminal device does not provide the relay service. It can be learned that the first terminal device may determine, at the moment T4, that the second terminal device is not suitable to serve as the relay device of the first terminal device, and does not need to wait until the first timer expires at the moment T5. To be specific, the first terminal device may more quickly determine, based on the second indication information sent by the second terminal device, that the second terminal device is not suitable to serve as the relay device of the first terminal device.

For example, the second terminal device may send the second indication information in a broadcast manner, to indicate, to a surrounding terminal device, that the second terminal device does not provide the relay service. For example, the second indication information is included in a discovery message broadcast by the second terminal device, and the discovery message carries the second indication information indicating that the second terminal device does not provide the relay service. Alternatively, the second indication information may be indication information separately broadcast by the second terminal device. Correspondingly, after receiving the second indication information, the first terminal device determines that the second terminal device is not the relay device of the first terminal device.

In some implementations, there is a unicast connection between the second terminal device and the first terminal device. In step 2002, the sending second indication information may be: The second terminal device sends the second indication information to the first terminal device based on the unicast connection.

For example, the second indication information may be in a form of any one of PC5 signaling (PC5 signaling), a PC5-RRC message, or a sidelink media access control control element (media access control control element, MAC CE).

In an implementation, there is a unicast connection between the first terminal device and the second terminal device, and the second terminal device provides the relay service for the first terminal device. When the second signal quality is less than the second threshold or the second signal quality is greater than the third threshold, the second terminal device is no longer suitable to provide the relay service for the first terminal device. Therefore, the second terminal device may send a unicast connection release request to the first terminal device, to release the unicast connection between the second terminal device and the first terminal device.

In this embodiment of this application, when the second signal quality of the second terminal device does not meet the threshold condition, that is, the second signal quality is less than the second threshold or the second signal quality is less than the third threshold, the second terminal device does not provide the relay service, and sends the second indication information, to notify a surrounding terminal device in a timely manner that the second terminal device does not provide the relay service, so as to prevent the surrounding terminal device of the second terminal device from reporting the second terminal device as the relay device.

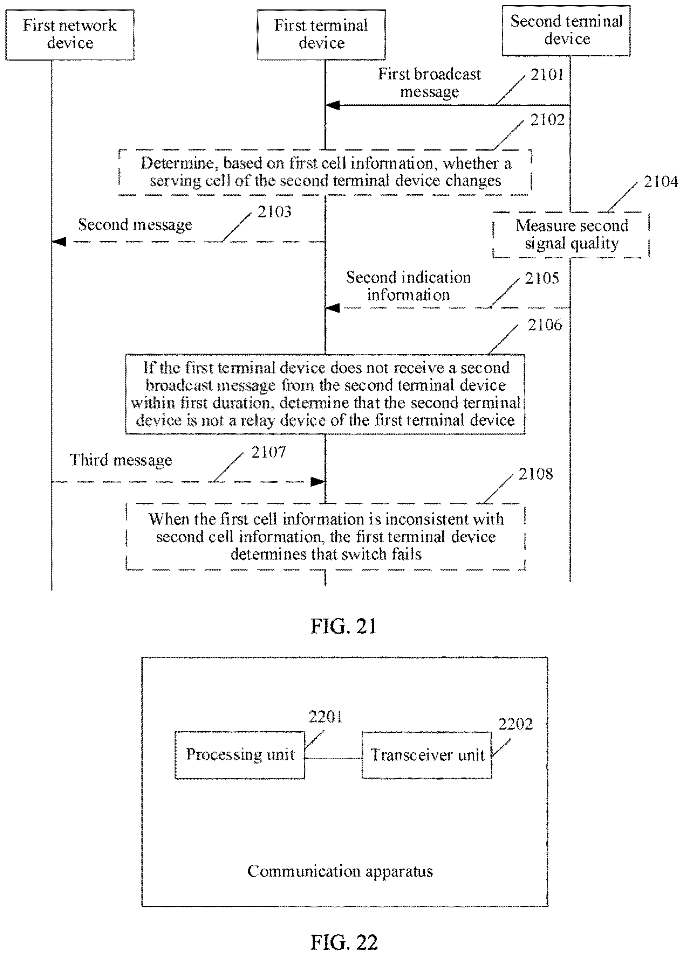

FIG. 21 is a schematic interaction diagram of still another communication method according to an embodiment of this application. As shown in FIG. 21, the method may include the following steps.

2101: A second terminal device sends a first broadcast message. Correspondingly, a first terminal device receives the first broadcast message.

It may be understood that for a specific implementation of step 2101, refer to the related descriptions of step 1501 in FIG. 15A. Details are not described herein again.

In a possible implementation, the first broadcast message includes a first identifier, the first identifier identifies the second terminal device, and the first identifier is generated when the second terminal device accesses a serving cell of the second terminal device.

For example, the first identifier may be a source L2 ID, and the source L2 ID is determined by the second terminal device. After receiving the first broadcast message, the first terminal device may determine, based on the first identifier carried in the first broadcast message, that the first broadcast message is from the second terminal device. For example, the first terminal device may receive a plurality of broadcast messages from a plurality of terminal devices, and determine transmitting ends of the plurality of broadcast messages based on identifiers carried in the plurality of broadcast messages. The first terminal device may determine broadcast messages carrying different identifiers as broadcast messages from different terminal devices. For example, the first terminal device receives a fourth broadcast message, the fourth broadcast message carries a second identifier, and the second identifier is different from the first identifier. In this case, the first terminal device determines that the fourth broadcast message is not from the second terminal device.

For example, the first broadcast message is a discovery message broadcast by the second terminal device, the second terminal device may periodically send a discovery message, and the discovery message includes a source L2 ID. After performing change, the second terminal device may change the source L2 ID in the discovery message. To be specific, a source L2 ID carried in a discovery message currently sent by the second terminal device is generated when the second terminal device accesses a current serving cell. The first terminal device may receive discovery messages sent by the plurality of terminal devices, and determine a transmitting end of a discovery message based on a source L2 ID carried in the discovery message. Therefore, for a discovery message sent by the second terminal device after the source L2 ID is changed, the first terminal device may consider that the discovery message is not from the second terminal device. To be specific, the first terminal device may measure a second terminal device after the source L2 ID is changed as a new measurement object.

In this embodiment of this application, the first terminal device may determine, based on the first identifier carried in the first broadcast message, that the first broadcast message is from the second terminal device. After the second terminal device performs the cell change, the second terminal device is considered as a new terminal device, that is, the second terminal device is used as the new measurement object for measurement, and serving cell information of the second terminal device does not need to be updated, so that workload of the first terminal device can be reduced, to improve measurement efficiency of the first terminal device.

In a possible implementation, the first broadcast message includes first cell information of the second terminal device, and after the first terminal device receives the first broadcast message sent by the second terminal device, the method shown in FIG. 21 may include step 2102 and step 2103.

2102: The first terminal device determines, based on the first cell information, whether the serving cell of the second terminal device changes.

2103: When the serving cell of the second terminal device changes, the first terminal device sends a second message to a first network device. The second message includes the first cell information.

For specific implementations of step 2102 and step 2103, refer to the related descriptions of step 1802 and step 1803 in FIG. 18A. Details are not described herein again.

In a possible implementation, the communication method shown in FIG. 21 may include step 2104 and step 2105.

2104: The second terminal device measures second signal quality. The second signal quality is signal quality between the second terminal device and a second network device.

2105: The second terminal device sends second indication information. Correspondingly, the first terminal device receives the second indication information.

When the second signal quality does not meet a threshold condition, the second terminal device sends the second indication information. The second indication information indicates that the second terminal device does not provide a relay service. After receiving the second indication information, the first terminal device determines that the second terminal device is not a relay device of the first terminal device.

It may be understood that for specific implementations of step 2104 and step 2105, refer to the related descriptions of step 2001 and step 2002 in FIG. 20. Details are not described herein again.

2106: If the first terminal device does not receive a second broadcast message from the second terminal device within first duration after the first terminal device receives the first broadcast message, the first terminal device determines that the second terminal device is not the relay device of the first terminal device.

It may be understood that for a specific implementation of step 2106, refer to the related descriptions of step 1502 in FIG. 15A. Details are not described herein again.

It may be understood that, when the first terminal device does not receive the second broadcast message from the second terminal device within the first duration after receiving the first broadcast message, or when the first terminal device receives the second indication information sent by the second terminal device, the first terminal device determines that the second terminal device is not the relay device of the first terminal device.

For example, after the determining that the second terminal device is not the relay device of the first terminal device, the following several implementations are further provided in this embodiment of this application.

Implementation 1: When the second terminal device is not the relay device of the first terminal device at a current moment, the first terminal device deletes measurement information corresponding to the second terminal device.

It may be understood that for a specific implementation of the implementation 1, refer to the related descriptions of step 1503 in FIG. 15A. Details are not described herein again.

Implementation 2: When the second terminal device is the relay device of the first terminal device at a current moment, and the first terminal device is in an RRC connected state, the first terminal device reports a measurement result to the first network device.

It may be understood that for a specific implementation of the implementation 2, refer to the related descriptions of step 1504 in FIG. 15B. Details are not described herein again.

Implementation 3: When the second terminal device is the relay device of the first terminal device at a current moment, and the first terminal device is in an RRC idle state or an RRC inactive state, the first terminal device determines to reselect a relay device.

It may be understood that for a specific implementation of the implementation 3, refer to the related descriptions of step 1505 in FIG. 15C. Details are not described herein again.

In a possible implementation, the first broadcast message includes first cell information of the second terminal device, and after the first terminal device receives the first broadcast message sent by the second terminal device, the communication method shown in FIG. 21 may include step 2107 and step 2108.

2107: The first terminal device receives a third message from the first network device, where the third message includes second cell information of the second terminal device, and the third message indicates to switch from the relay device of the first terminal device to the second terminal device.

2108: When the first cell information is inconsistent with the second cell information, the first terminal device determines that the switch fails.

It may be understood that for specific implementations of step 2107 and step 2108, refer to the related descriptions of step 1902 and step 1903 in FIG. 19. Details are not described herein again.

It may be understood that if the first terminal device receives the third message before step 2106, the first terminal device compares the first cell information with the second cell information. When the first cell information is inconsistent with the second cell information, the first terminal device determines that the switch fails and does not perform a subsequent switch action. When the first cell information is consistent with the second cell information, the first terminal device continues performing a subsequent action. After the first terminal device determines that the switch fails, the first terminal device may perform one or more of the following: recording the switch failure, breaking a unicast connection between the first terminal device and the second terminal device, and performing RRC connection reestablishment. If the first terminal device receives the third message after step 2106, the first terminal device determines that the switch fails, and does not need to compare the first cell information with the second cell information.

In this embodiment of this application, when receiving a handover command sent by the first network device and discovery information of the second terminal device, the first terminal device compares whether cell information of the second terminal device that is carried in the handover command is the same as cell information of the second terminal device that is carried in the discovery information. When the first cell information is inconsistent with the second cell information, the first terminal device determines that the switch fails, and no longer performs a subsequent switch operation, to avoid a waste of resources in the subsequent switch operation.

In some implementations, the first terminal device may communicate with a network device via a plurality of serving relay terminals. The first terminal device may measure measurement results of the serving relay terminals and a surrounding relay terminal based on discovery messages sent by the serving relay terminals and the surrounding relay terminal. The first terminal device may release the relay terminal or add the relay terminal based on the measurement result of the serving relay terminal or the surrounding relay device. For example, in a multi-path relaying communication scenario, the first terminal device may communicate with the network device through a serving relay terminal and a direct link of a Uu interface. When the first terminal device detects that signal quality of a sidelink of the serving relay terminal is less than a preset threshold, or the first terminal device cannot receive a discovery message sent by the serving relay terminal, the first terminal device may perform measurement reporting, to report a measurement result to the first network device, so that the first network device indicates, based on the measurement result, the first terminal device to release the serving relay terminal, add the serving relay terminal, or hand over the serving relay terminal. The signal quality of the sidelink of the serving relay terminal may be SD-RSRP or SL-RSRP. For example, after detecting that the surrounding relay terminal stops sending the discovery message, the first terminal device deletes measurement information corresponding to the surrounding relay terminal. For example, the first terminal device may delete a measurement entry corresponding to the surrounding relay terminal from a measurement variable of the first terminal device.

In this embodiment of this application, for a serving relay terminal, after the first terminal device does not receive a discovery message of the serving relay terminal, the first terminal device triggers measurement reporting. For a surrounding relay terminal, after the first terminal device does not receive a discovery message of the surrounding relay terminal, the first terminal device may delete measurement information corresponding to the surrounding relay terminal from a measurement result, so that the measurement result of the first terminal device includes measurement information of an appropriate surrounding relay terminal. In this way, the first terminal device can effectively release or add the serving relay terminal.

In this embodiment of this application, if the first terminal device does not receive the second broadcast message within the first duration after receiving the first broadcast message, the first terminal device may determine that the second terminal device is not the relay device of the first terminal device, to more accurately determine whether the second terminal device is suitable to serve as the relay device of the first terminal device. Optionally, when receiving the second indication information sent by the second terminal device, the first terminal device may further determine that the second terminal device is not the relay device of the first terminal device. The first terminal device can more quickly determine, based on the second indication information, whether the second terminal device is suitable to serve as the relay device of the first terminal device. Optionally, the first terminal device may further determine, based on the first broadcast message, whether the serving cell of the second terminal device changes. When the serving cell of the second terminal device changes, the first terminal device sends the second message to the first network device, to update the serving cell information of the second terminal device in the first network device in a timely manner.

A communication apparatus provided in an embodiment of this application is described below.

In this application, the communication apparatus is divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in this application, the module division is an example, and is merely a logical function division. During actual implementation, another division manner may be used. The following describes in detail communication apparatuses in embodiments of this application with reference to FIG. 22 to FIG. 24.

FIG. 22 is a diagram of a structure of a communication apparatus according to an embodiment of this application. As shown in FIG. 22, the communication apparatus includes a processing unit 2201 and a transceiver unit 2202.

In some embodiments of this application, the communication apparatus may be the foregoing first terminal device. To be specific, the communication apparatus shown in FIG. 22 may be configured to perform a step, a function, or the like performed by the first terminal device in the foregoing method embodiments.

The transceiver unit 2202 is configured to receive a first broadcast message sent by a second terminal device.

The processing unit 2201 is configured to: when the first terminal device does not receive a second broadcast message from the second terminal device within first duration after the first terminal device receives the first broadcast message, determine that the second terminal device is not a relay device of the first terminal device.

Optionally, the processing unit 2201 is further configured to delete measurement information corresponding to the second terminal device.

Optionally, the processing unit 2201 is further configured to determine to reselect a relay device. For another example, the processing unit 2201 is further configured to report a measurement result to a first network device.

Optionally, the transceiver unit 2202 is further configured to: send first indication information to the second terminal device, and receive a first message. The processing unit 2201 is further configured to: determine first signal quality based on the first message, and when the first signal quality is less than a first threshold, determine that the second terminal device is not the relay device of the first terminal device.

Optionally, the transceiver unit 2202 is further configured to receive second indication information from the second terminal device.

Optionally, the processing unit 2201 is further configured to determine whether a serving cell of the second terminal device is handed over. The transceiver unit 2202 is further configured to send a second message to the first network device.

Optionally, the processing unit 2201 is further configured to determine whether a current serving cell of the second terminal device is an allowed cell. The transceiver unit is specifically configured to: when the current serving cell of the second terminal device is the allowed cell, send the second message to the first network device.

Optionally, the processing unit 2201 is further configured to: when the current serving cell of the second terminal device is a blocked cell, delete the measurement information corresponding to the second terminal device.

Optionally, the transceiver unit 2202 is further configured to receive a third message from the first network device. The processing unit 2201 is further configured to: when first cell information is inconsistent with second cell information, determine, by the first terminal device, that the switch fails.

Optionally, the processing unit 2201 is further configured to: record the switch failure, break a connection to the second terminal device, or perform radio resource control RRC connection reestablishment.

Optionally, the transceiver unit 2202 is further configured to receive third indication information of the first network device.

Optionally, the processing unit 2201 is further configured to start a first timer. For another example, the processing unit 2201 is further configured to reset the first timer.

It may be understood that for specific descriptions of the first broadcast message, the second broadcast message, the measurement information, the first indication information, the first message, the first signal quality, the second indication information, the second message, the third message, or the like, refer to the foregoing method embodiments: the methods shown in FIG. 15A, FIG. 15B, FIG. 15C, FIG. 17, FIG. 18A, FIG. 18B, FIG. 19, FIG. 20, and FIG. 21. Details are not described herein again.

It may be understood that the specific descriptions of the transceiver unit and the processing unit described in this embodiment of this application are merely examples. For specific functions, steps, or the like of the transceiver unit and the processing unit, refer to the foregoing method embodiments. Details are not described herein again. For example, the transceiver unit 2202 may be further configured to perform receiving steps in step 1501, step 1701, step 1801, step 1901, step 1902, step 2002, step 2101, and step 2105, and sending steps in step 1504, step 1803, and step 2103. The processing unit 2201 may be further configured to perform step 1502, step 1503, step 1505, step 1702, step 1802, step 1804, step 1805, step 1903, step 2102, step 2104, and step 2106.

FIG. 22 is reused. In some other embodiments of this application, the communication apparatus may be the foregoing second terminal device. To be specific, the communication apparatus shown in FIG. 22 may be configured to perform a step, a function, or the like performed by the second terminal device in the foregoing method embodiments.

The processing unit 2201 is configured to measure second signal quality.

The transceiver unit 2202 is configured to send second indication information.

It may be understood that for the specific descriptions of the second signal quality, the second indication information, or the like, refer to the foregoing method embodiments: the methods shown in FIG. 15A, FIG. 15B, FIG. 15C, FIG. 17, FIG. 18A, FIG. 18B, FIG. 19, and FIG. 20. Details are not described herein again.

It may be understood that the specific descriptions of the transceiver unit and the processing unit described in this embodiment of this application are merely examples. For specific functions, steps, or the like of the transceiver unit and the processing unit, refer to the foregoing method embodiments. Details are not described herein again. For example, the transceiver unit 2202 is further configured to perform sending steps in step 1501, step 1701, step 1801, step 1901, and step 2002, and step 2101, and the processing unit is further configured to perform step 2001.

The first terminal device and the second terminal device in embodiments of this application are described above. Possible product forms of the first terminal device and the second terminal device are described below. It should be understood that a product in any form that has the function of the first terminal device in FIG. 22 or a product in any form that has the function of the second terminal device in FIG. 22 falls within the protection scope of embodiments of this application. It should be further understood that the following descriptions are merely an example, and the product forms of the first terminal device and the second terminal device in embodiments of this application are not limited thereto.

In the communication apparatus shown in FIG. 22, the processing unit 2201 may be one or more processors, and the transceiver unit 2202 may be a transceiver. Alternatively, the processing unit 2201 may be one or more processors (or the processing unit 2201 may be one or more logic circuits), and the transceiver unit 2202 may be an input/output interface. Details are as follows:
In a possible implementation, in the communication apparatus shown in FIG. 22, the processing unit 2201 may be one or more processors, and the transceiver unit 2202 may be a transceiver. In this embodiment of this application, the processor and the transceiver may be coupled, or the like. A connection manner between the processor and the transceiver is not limited in this embodiment of this application.

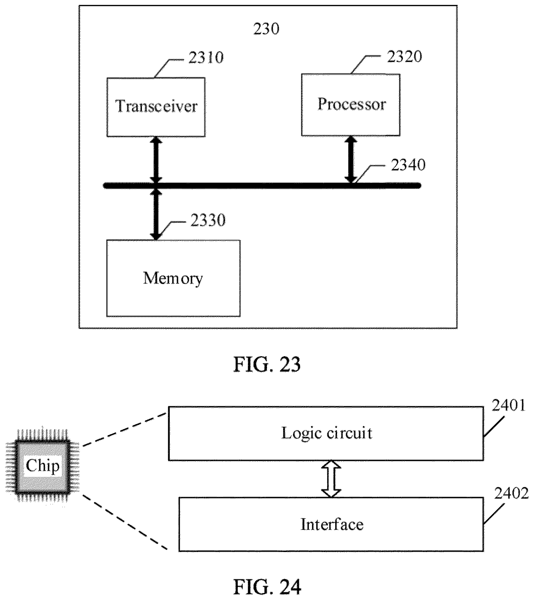

As shown in FIG. 23, a communication apparatus 230 includes one or more processors 2320 and a transceiver 2310.

For example, when the communication apparatus is configured to perform the step, the method, or the function performed by the foregoing first terminal device, the transceiver 2310 is configured to receive a first broadcast message sent by a second terminal device. The processor 2320 is configured to determine that the second terminal device is not a relay device of the first terminal device.

For example, when the communication apparatus is configured to perform the step, the method, or the function performed by the foregoing second terminal device, the processor 2320 is configured to measure second information quality. The transceiver 2310 is configured to send second indication information.

It may be understood that for specific descriptions of the first broadcast message, the second broadcast message, the second signal quality, the second indication information, or the like, refer to the foregoing method embodiments: the methods shown in FIG. 15A, FIG. 15B, FIG. 15C, FIG. 17, FIG. 18A, FIG. 18B, FIG. 19, and FIG. 20. Details are not described herein again.

It may be understood that for the specific descriptions of the processor and the transceiver, refer to the descriptions of the processing unit and the transceiver unit shown in FIG. 22. Details are not described herein again.

In various implementations of the communication apparatus shown in FIG. 23, the transceiver may include a receiver and a transmitter, the receiver is configured to perform a receiving function (or operation), and the transmitter is configured to perform a transmitting function (or operation). The transceiver is configured to communicate with another device/apparatus through a transmission medium.

Optionally, the communication apparatus 230 may further include one or more memories 2330, configured to store program instructions and/or data. The memory 2330 is coupled to the processor 2320. The coupling in this embodiment of this application may be an indirect coupling or a communication connection between apparatuses, units, or modules in an electrical form, a mechanical form, or another form, and is used for information exchange between the apparatuses, the units, or the modules. The processor 2320 may cooperate with the memory 2330. The processor 2320 may execute the program instructions stored in the memory 2330. Optionally, at least one of the one or more memories may be included in the processor.

A specific connection medium between the transceiver 2310, the processor 2320, and the memory 2330 is not limited in this embodiment of this application. In this embodiment of this application, the memory 2330, the processor 2320, and the transceiver 2310 are connected through a bus 2340 in FIG. 23, and the bus is represented by a bold line in FIG. 23. A connection manner between other components is merely an example for description, and is not limited thereto. The bus may be classified into an address bus, a data bus, a control bus, and the like. For ease of representation, only one bold line is used to represent the bus in FIG. 23, but this does not mean that there is only one bus or only one type of bus.

In this embodiment of this application, the processor may be a general-purpose processor, a digital signal processor, an application-specific integrated circuit, a field programmable gate array or another programmable logic device, a discrete gate or transistor logic device, a discrete hardware component, or the like. The processor can implement or execute the methods, the steps, and the logical block diagrams disclosed in embodiments of this application. The general-purpose processor may be a microprocessor, any conventional processor, or the like. The steps of the methods disclosed in combination with embodiments of this application may be directly implemented by a hardware processor, or may be implemented by using a combination of hardware and software modules in the processor, or the like.

In this embodiment of this application, the memory may include but is not limited to a non-volatile memory such as a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), a portable read-only memory (Compact Disc Read-Only Memory, CD-ROM), or the like. The memory is any storage medium that can be configured to carry or store program code in a form of an instruction or a data structure and that can be read and/or written by a computer (for example, the communication apparatus shown in this application), but is not limited thereto. The memory in this embodiment of this application may alternatively be a circuit or any other apparatus that can implement a storage function, and is configured to store the program instructions and/or the data.

The processor 2320 is mainly configured to: process a communication protocol and communication data, control the entire communication apparatus, execute a software program, and process data of the software program. The memory 2330 is mainly configured to store the software program and the data. The transceiver 2310 may include a control circuit and an antenna. The control circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to: receive data entered by a user and output data to the user.

After the communication apparatus is powered on, the processor 2320 may read the software program in the memory 2330, interpret and execute instructions of the software program, and process the data of the software program. When data needs to be sent wirelessly, after performing baseband processing on the to-be-sent data, the processor 2320 outputs a baseband signal to the radio frequency circuit. The radio frequency circuit performs radio frequency processing on the baseband signal, and sends a radio frequency signal to the outside in a form of an electromagnetic wave through the antenna. When data is sent to the communication apparatus, the radio frequency circuit receives a radio frequency signal through the antenna, converts the radio frequency signal into a baseband signal, and outputs the baseband signal to the processor 2320. The processor 2320 converts the baseband signal into data, and processes the data.

In another implementation, the radio frequency circuit and the antenna may be disposed independent of the processor that performs baseband processing. For example, in a distributed scenario, the radio frequency circuit and the antenna may be remotely disposed independent of the communication apparatus.

It may be understood that the communication apparatus shown in this embodiment of this application may alternatively include more components than those shown in FIG. 23, or the like. This is not limited in this embodiment of this application. The foregoing methods performed by the processor and the transceiver are merely examples. For specific steps performed by the processor and the transceiver, refer to the methods described above.

In another possible implementation, in the communication apparatus shown in FIG. 22, the processing unit 2201 may be one or more logic circuits, and the transceiver unit 2202 may be an input/output interface. The input/output interface is also referred to as a communication interface, an interface circuit, an interface, or the like. A communication apparatus shown in FIG. 24 includes a logic circuit 2401 and an interface 2402. To be specific, the foregoing processing unit 2201 may be implemented by using the logic circuit 2401, and the transceiver unit 2202 may be implemented by using the interface 2402. The logic circuit 2401 may be a chip, a processing circuit, an integrated circuit, a system on a chip (system on a chip, SoC), or the like. The interface 2402 may be a communication interface, an input/output interface, a pin, or the like. For example, FIG. 24 shows an example in which the communication apparatus is a chip. The chip includes the logic circuit 2401 and the interface 2402.

In this embodiment of this application, the logic circuit and the interface may be further coupled to each other. A specific connection manner between the logical circuit and the interface is not limited in this embodiment of this application.

For example, when the communication apparatus is configured to perform the method, the function, or the step performed by the foregoing first terminal device, the interface 2402 is configured to receive a first broadcast message. The logic circuit 2401 is configured to: if the first terminal device does not receive a second broadcast message from a second terminal device within first duration after the first terminal device receives the first broadcast message, determine that the second terminal device is not a relay device of the first terminal device.

For example, when the communication apparatus is configured to perform the method, the function, or the step performed by the foregoing second terminal device, the interface 2402 is configured to send second indication information and send the first broadcast message.

It may be understood that the communication apparatus shown in this embodiment of this application may implement the method provided in embodiments of this application in a form of hardware, or may implement the method provided in embodiments of this application in a form of software. This is not limited in this embodiment of this application.

It may be understood that for specific descriptions of the first broadcast message, the second broadcast message, the second signal quality, the second indication information, or the like, refer to the foregoing method embodiments: the methods shown in FIG. 15A, FIG. 15B, FIG. 15C, FIG. 17, FIG. 18A, FIG. 18B, FIG. 19, and FIG. 20. Details are not described herein again.

For specific implementations of embodiments shown in FIG. 24, refer to the foregoing embodiments. Details are not described herein again.

An embodiment of this application further provides a wireless communication system. The wireless communication system includes a first terminal device and a second terminal device. The first terminal device and the second terminal device may be configured to perform the method according to any one of the foregoing embodiments (shown in FIG. 15A, FIG. 15B, FIG. 15C, FIG. 17, FIG. 18A, FIG. 18B, FIG. 19, FIG. 20, and the like).

In addition, this application further provides a computer program. The computer program is used to implement the operation and/or the processing performed by the first terminal device in the method provided in this application.

This application further provides a computer program. The computer program is used to implement the operation and/or the processing performed by the second terminal device in the method provided in this application.

This application further provides a computer-readable storage medium. The computer-readable storage medium stores computer code. When the computer code is run on a computer, the computer is enabled to perform the operation and/or the processing performed by the first terminal device in the method provided in this application.

This application further provides a computer-readable storage medium. The computer-readable storage medium stores computer code. When the computer code is run on a computer, the computer is enabled to perform the operation and/or the processing performed by the second terminal device in the method provided in this application.

This application further provides a computer program product. The computer program product includes computer code or a computer program. When the computer code or the computer program is run on a computer, the operation and/or the processing performed by the first terminal device in the method provided in this application are/is performed.

This application further provides a computer program product. The computer program product includes computer code or a computer program. When the computer code or the computer program is run on a computer, the operation and/or the processing performed by the second terminal device in the method provided in this application are/is performed.

In the several embodiments provided in this application, it should be understood that the disclosed system, apparatus, and method may be implemented in other manners. For example, the described apparatus embodiments are merely examples. For example, the unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected based on an actual requirement to implement the technical effects of the solutions provided in embodiments of this application.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or a part of the technical solutions may be implemented in a form of a software product. The computer software product is stored in a readable storage medium, and includes several instructions for instructing a computer device (which may be a personal computer, a server, a network device, or the like) to perform all or a part of the steps of the methods described in embodiments of this application. The readable storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a first terminal device, a first broadcast message sent by a second terminal device; and
if the first terminal device does not receive a second broadcast message from the second terminal device within first duration after the first terminal device receives the first broadcast message, determining that the second terminal device is not a relay device of the first terminal device.

2. The method according to claim 1, wherein after the determining that the second terminal device is not a relay device of the first terminal device, the method further comprises:
deleting, by the first terminal device, measurement information corresponding to the second terminal device.

3. The method according to claim 1, wherein there is a unicast connection between the first terminal device and the second terminal device, and after the determining that the second terminal device is not a relay device of the first terminal device, the method further comprises at least one of the following:
determining, by the first terminal device, to reselect a relay device; and
reporting, by the first terminal device, a measurement result to a first network device.

4. The method according to claim 1, wherein there is a unicast connection between the first terminal device and the second terminal device, and before the determining that the second terminal device is not a relay device of the first terminal device, the method further comprises:
sending, by the first terminal device, first indication information to the second terminal device through the unicast connection, wherein the first indication information is used to trigger the second terminal device to send a first message, the first message is used to measure first signal quality, and the first signal quality is signal quality between the first terminal device and the second terminal device;
receiving, by the first terminal device, the first message; and
determining, by the first terminal device, the first signal quality based on the first message; and
the determining that the second terminal device is not a relay device of the first terminal device comprises:
when the first signal quality is less than a first threshold, determining, by the first terminal device, that the second terminal device is not the relay device of the first terminal device.

5. The method according to claim 1, wherein the determining that the second terminal device is not a relay device of the first terminal device comprises:
when receiving second indication information from the second terminal device, determining, by the first terminal device, that the second terminal device is not the relay device of the first terminal device, wherein the second indication information indicates that the second terminal device does not provide a relay service.

6. The method according to claim 5, wherein the second indication information is sent by the second terminal device when second signal quality is less than a second threshold or the second signal quality is greater than a third threshold, and the second signal quality is signal quality between the second terminal device and a second network device.

7. The method according to any one of claims 1 to 6, wherein the first broadcast message comprises a first identifier, the first identifier identifies the second terminal device, and the first identifier is generated when the second terminal device accesses a serving cell of the second terminal device.

8. The method according to any one of claims 1 to 7, wherein the first broadcast message comprises first cell information of the second terminal device, and after the receiving, by a first terminal device, a first broadcast message sent by a second terminal device, the method further comprises:
determining, by the first terminal device based on the first cell information, whether the serving cell of the second terminal device changes; and
when the serving cell of the second terminal device changes, sending, by the first terminal device, a second message to the first network device, wherein the second message comprises the first cell information.

9. The method according to claim 8, wherein before the sending, by the first terminal device, a second message to the first network device, the method further comprises:
determining, by the first terminal device based on the first cell information, whether a current serving cell of the second terminal device is an allowed cell; and
the sending, by the first terminal device, a second message to the first network device comprises:
when the current serving cell of the second terminal device is the allowed cell, sending the second message to the first network device.

10. The method according to claim 9, wherein the method further comprises:
when the current serving cell of the second terminal device is a blocked cell, deleting, by the first terminal device, the measurement information corresponding to the second terminal device.

11. The method according to claim 8 or 9, wherein the first cell information is comprised in the measurement information corresponding to the second terminal device.

12. The method according to any one of claims 1 to 11, wherein the first broadcast message comprises the first cell information of the second terminal device, and after the receiving, by a first terminal device, a first broadcast message sent by a second terminal device, the method further comprises:
receiving, by the first terminal device, a third message from the first network device, wherein the third message comprises second cell information of the second terminal device, and the third message indicates the first terminal device to switch from a relay device of the first terminal device to the second terminal device; and
when the first cell information is inconsistent with the second cell information, determining, by the first terminal device, that the switch fails.

13. The method according to claim 12, wherein after the determining, by the first terminal device, that the switch fails, the method further comprises at least one of the following:
recording, by the first terminal device, the switch failure;
breaking, by the first terminal device, a connection to the second terminal device; and
performing, by the first terminal device, radio resource control RRC connection reestablishment.

14. The method according to any one of claims 1 to 13, wherein the method further comprises:
receiving, by the first terminal device, third indication information of the first network device, wherein the third indication information indicates the first duration.

15. The method according to any one of claims 1 to 14, wherein before the determining that the second terminal device is not a relay device of the first terminal device, the method further comprises:
when receiving the first broadcast message, starting, by the first terminal device, a first timer corresponding to the second terminal device, wherein running duration of the first timer is equal to the first duration; and
when the first timer expires, determining, by the first terminal device, that the second broadcast message is not received within the first duration.

16. The method according to claim 15, wherein the method further comprises:
if the first terminal device receives the second broadcast message within the first duration, resetting the first timer.

17. The method according to claim 15 or 16, wherein the first timer is controlled by a protocol layer of the first terminal device, and the protocol layer comprises any one of a radio resource control RRC layer, a physical layer, a media access control MAC layer, and a discovery protocol layer.

18. A communication apparatus, comprising:
a transceiver unit, configured to receive a first broadcast message sent by a second terminal device; and
a processing unit, configured to: when a second broadcast message from the second terminal device is not received within first duration after the first broadcast message is received, determine that the second terminal device is not a relay device of the first terminal device.

19. The apparatus according to claim 18, wherein
the processing unit is further configured to delete measurement information corresponding to the second terminal device.

20. The apparatus according to claim 18, wherein
the processing unit is further configured to: determine to reselect a relay device, or report a measurement result to a first network device.

21. The apparatus according to claim 18, wherein there is a unicast connection between the communication apparatus and the first terminal device;
the transceiver unit is specifically configured to: send first indication information to the second terminal device based on the unicast connection, wherein the first indication information is used to trigger the second terminal device to send a first message, the first message is used to measure first signal quality, and the first signal quality is signal quality between the first terminal device and the second terminal device; and receive the first message; and
the processing unit is specifically configured to: determine the first signal quality based on the first message; and when the first signal quality is less than a first threshold, determine, by the first terminal device, that the second terminal device is not a relay device of the first terminal device.

22. The apparatus according to claim 18, wherein
the processing unit is specifically configured to: when second indication information is received from the second terminal device, determine that the second terminal device is not the relay device of the first terminal device, wherein the second indication information indicates that the second terminal device does not provide a relay service.

23. The apparatus according to claim 22, wherein the second indication information is sent by the second terminal device when second signal quality is less than a second threshold or the second signal quality is greater than a third threshold, and the second signal quality is signal quality between the second terminal device and a second network device.

24. The apparatus according to any one of claims 18 to 23, wherein the first broadcast message comprises a first identifier, the first identifier identifies the second terminal device, and the first identifier is generated when the second terminal device accesses a serving cell of the second terminal device.

25. The apparatus according to any one of claims 18 to 24, wherein the first broadcast message comprises first cell information of the second terminal device;
the processing unit is further configured to determine, based on the first cell information, whether the serving cell of the second terminal device changes; and
the transceiver unit is further configured to: when the serving cell of the second terminal device changes, send a second message to the first network device, wherein the second message comprises the first cell information.

26. The apparatus according to claim 25, wherein
the processing unit is further configured to determine, based on the first cell information, whether a current serving cell of the second terminal device is an allowed cell; and
the transceiver unit is specifically configured to: when the current serving cell of the second terminal device is the allowed cell, send the second message to the first network device.

27. The apparatus according to claim 26, wherein
the processing unit is further configured to: when the current serving cell of the second terminal device is a blocked cell, delete the measurement information corresponding to the second terminal device.

28. The apparatus according to claim 25 or 26, wherein the first cell information is comprised in the measurement information corresponding to the second terminal device.

29. The apparatus according to any one of claims 18 to 28, wherein the first broadcast message comprises the first cell information of the second terminal device;
the transceiver unit is further configured to receive a third message from the first network device, wherein the third message comprises second cell information of the second terminal device, and the third message indicates to switch from a relay device of the first terminal device to the second terminal device; and
the processing unit is further configured to: when the first cell information is inconsistent with the second cell information, determine that the switch fails.

30. The apparatus according to claim 29, wherein
the processing unit is further configured to: record the switch failure, break a connection to the second terminal device, or perform radio resource control RRC connection reestablishment.

31. The apparatus according to any one of claims 18 to 30, wherein
the transceiver unit is further configured to receive third indication information of the first network device, wherein the third indication information indicates the first duration.

32. The apparatus according to any one of claims 18 to 31, wherein
the processing unit is further configured to: start a first timer corresponding to the second terminal device, wherein running duration of the first timer is equal to the first duration; and when the first timer expires, determine that the second broadcast message is not received within the first duration.

33. The apparatus according to claim 32, wherein
the processing unit is further configured to reset the first timer.

34. The apparatus according to claim 32 or 33, wherein the first timer is controlled by a protocol layer of the communication apparatus, and the protocol layer comprises any one of a radio resource control RRC layer, a physical layer, a media access control MAC layer, and a discovery protocol layer.

35. A communication apparatus, comprising a processor and a memory, wherein
the processor is configured to store computer-executable instructions; and
the processor is configured to execute the computer-executable instructions, to perform the method according to any one of claims 1 to 17.

36. A computer-readable storage medium, wherein the computer-readable storage medium is configured to store a computer program, and when the computer program is executed, the method according to any one of claims 1 to 17 is performed.

37. A communication method, comprising:
receiving, by a first terminal device, a first broadcast message sent by a second terminal device, wherein the first broadcast message comprises first cell information of the second terminal device;
receiving, by the first terminal device, a third message from a first network device, wherein the third message comprises second cell information of the second terminal device, and the third message indicates to switch from a relay device of the first terminal device to the second terminal device; and
when the first cell information is inconsistent with the second cell information, determining, by the first terminal device, that the switch fails.

38. The method according to claim 37, wherein after the determining, by the first terminal device, that the switch fails, the method further comprises at least one of the following:
recording, by the first terminal device, the switch failure;
breaking, by the first terminal device, a connection to the second terminal device; and
performing, by the first terminal device, radio resource control RRC connection reestablishment.

39. A communication apparatus, comprising a unit configured to perform the method according to claim 37 or 38.

40. A communication apparatus, comprising a processor and a memory, wherein
the processor is configured to store computer-executable instructions; and
the processor is configured to execute the computer-executable instructions, to perform the method according to claim 37 or 38.

41. A computer-readable storage medium, wherein the computer-readable storage medium is configured to store a computer program, and when the computer program is executed, the method according to claim 37 or 38 is performed.
